# EUROPÄISCHE PATENTSCHRIFT

(11) **EP 3 439 518 B1**
(45) Veröffentlichungstag und Bekanntmachung des Hinweises auf die Patenterteilung: **21.08.2019**
(21) Anmeldenummer: 18712535.6
(22) Anmeldetag: 13.03.2018
(51) Int. Cl.: A47J 31/60, A47J 31/44

(54) **MILCHZUFUHRVORRICHTUNG SOWIE VERFAHREN ZUM ZUFÜHREN VON MILCH**
MILK SUPPLY DEVICE AND METHOD FOR SUPPLYING MILK
DISPOSITIF D'ACHEMINEMENT DE LAIT AINSI QUE PROCÉDÉ PERMETTANT D'ACHEMINER DU LAIT

(30) Priorität: 21.04.2017 DE 102017206767
(43) Veröffentlichungstag der Anmeldung: 13.02.2019
(73) Patentinhaber: WMF Group GmbH, 73312 Geislingen/Steige (DE)
(72) Erfinder: ARNDT, Peter, 89134 Blaustein (DE); GÖLTENBOTH, Frank, 89134 Blaustein (DE); GUSSMANN, Jochen, 73527 Schwäbisch-Gmünd (DE); KIEFER, Alexander, 73329 Kuchen (DE); SCHIRRMACHER, Philipp, 89073 Ulm (DE); STARTZ, Armin, 89197 Weidenstetten (DE)
(74) Vertreter: Pfenning, Meinig & Partner mbB
(86) Internationale Anmeldenummer: PCT/EP2018/056220
(87) Internationale Veröffentlichungsnummer: WO 2018/192716

(56) Entgegenhaltungen:
- EP-A1- 1 911 382
- EP-A1- 2 078 481
- EP-A1- 2 869 066
- DE-U1-202012 009 076

## Beschreibung

Die vorliegende Erfindung bezieht sich auf eine Milchzufuhrvorrichtung gemäß des Oberbegriffs aus Anspruch 1, auf einen Getränkebereiter (insbesondere: elektrisch betriebene Kaffeemaschine) mit einer solchen Milchzufuhrvorrichtung sowie auf ein Verfahren zum Zuführen von Milch.

Milchzufuhrvorrichtungen bzw. Getränkebereiter mit solchen Milchzufuhrvorrichtungen (diese werden nachfolgend alternativ auch als Milchsysteme bezeichnet) müssen regelmäßig gereinigt werden, um ein potenzielles Keimwachstum und einen Aufbau von Milchresten zu verhindern. Dabei ist für eine regelmäßige Reinigung des Milchsystems ein händischer Eingriff notwendig, welcher in professionellem Gebrauch und/oder bei entsprechender Nutzung oft täglich stattfinden muss. Dies ist zeitaufwendig und beim professionellen Gebrauch muss Bedienpersonal mit entsprechender Kenntnis zur Durchführung der Reinigung vor Ort sein.

Die DE 20 2012 009 076 U1 offenbart eine Vorrichtung zur Abgabe von Milch oder zur Bereitung von Milchschaum in wahlweise kalter oder warmer Form.

Aufgabe der vorliegenden Erfindung ist es, die Reinigung einer Milchzufuhrvorrichtung bzw. eines Getränkebereiters zu verbessern, insbesondere den Automatisierungsgrad bei der Reinigung zu erhöhen. Dies soll so gestaltet werden, dass wenige bis gar keine händischen Eingriffe in das Milchsystem notwendig sind.

Diese Aufgabe wird durch die Milchzufuhrvorrichtung gemäß Anspruch 1, den Getränkebereiter gemäß Anspruch 14 sowie das Verfahren gemäß Anspruch 15 gelöst. Vorteilhafterweise realisierbare Varianten lassen sich dabei jeweils den abhängigen Ansprüchen entnehmen.

Eine erfindungsgemäße Milchzufuhrvorrichtung lässt sich Anspruch 1 entnehmen.

Das In-Fluidverbindung-mit-der-Milchtransportleitung-Stehen der Reinigungsmitteltransportleitung kann ein Einmünden der Reinigungsmitteltransportleitung in die Milchtransportleitung sein. Im Milchflussbetriebszustand kann dabei die Einmündung der Reinigungsmitteltransportleitung in die Milchtransportleitung bspw. mittels eines Ventils der Drei-Wege-Zusammenführung geschlossen werden.

Das Betreiben gemäß der zwei unterschiedlichen Leitungssystemzustände (besagtes Leitungssystem umfasst die Milchtransportleitung sowie die Reinigungsmitteltransportleitung) kann so erfolgen, dass die Milchzufuhrvorrichtung von einem ersten Betriebszustand (Milchflussbetriebszustand gemäß des ersten Spiegelpunkts: Milchfluss zur Milchausgabeeinrichtung hin bei von diesem Milchfluss vollständig abgetrenntem Reinigungsmittelfluss und/oder bei unterbrochenem Reinigungsmittelfluss) in einen von einem oder mehreren anderen Betriebszustand/-zuständen (Reinigungsbetriebszustand bzw. Reinigungsbetriebszustände gemäß des zweiten Spiegelpunkts: Reinigungsmittelfluss hin zur Milchausgabeeinrichtung und/oder zum Ablauf bei von diesem Reinigungsmittelfluss vollständig abgetrenntem Milchfluss und/oder bei unterbrochenem Milchfluss) umgeschaltet wird und umgekehrt.

Die Milchzufuhrvorrichtung kann so ausgebildet sein, dass mehrere Reinigungsbetriebszustände gemäß des zweiten Spiegelpunkts realisiert sind. Dies kann mikroprozessorgesteuert oder computergesteuert erfolgen, die Milchzufuhrvorrichtung kann also bspw. einen Mikrocontroller umfassen, der einen Programmspeicher aufweist, in dem ein oder mehrere geeignete(s) Steuerprogramm(e) ablegbar ist/sind oder abgelegt ist/sind. Die Milchzufuhrvorrichtung kann also eine zentrale Steuereinheit aufweisen, die einen Mikroprozessor umfasst und einen Programmspeicher umfasst. Der Programmspeicher kann geeignete Steuerprogramme zum Wechsel (Umschalten) zwischen dem Betrieb der Vorrichtung im Milchflussbetriebszustand und im bzw. in den Reinigungsbetriebszustand/-zuständen oder zum Wechsel (Umschalten) von einem Reinigungsbetriebszustand in einen anderen Reinigungsbetriebszustand enthalten (bzw. zur Aufnahme solcher Steuerprogramme ausgebildet sein). Das Wechseln oder Umschalten zwischen den Betriebszuständen kann mittels eines oder mehrerer Ventils/Ventile erfolgen.

Die Milchzufuhrvorrichtung kann ein separates, also eigenständig betreibbares ("Stand alone") Gerät sein, ein separates (bspw. in einem separaten Gehäuse untergebrachtes), an einem Getränkeautomaten (bspw. elektrische Kaffeemaschine oder Kaffeevollautomat oder auch Teemaschine) anschließbares, also Getränkeautomat-externes Gerät sein oder auch eine in einen (also vor allem in dessen Gehäuse) solchen Getränkeautomaten integrierte Vorrichtung sein.

Der Milchvorratsbehälter ist üblicherweise Milchzufuhrvorrichtung-extern (kann aber auch ein Teil der Milchzufuhrvorrichtung sein). Extern bedeutet hier in der Regel, dass der Milchvorratsbehälter separat außerhalb des Gehäuses der Milchzufuhrvorrichtung positioniert wird und an die Milchzufuhrvorrichtung bzw. ein Gehäuse derselben angeschlossen wird. Das Reinigungsmittel kann aus einem Reinigungsmittelreservoir zugeführt werden, also bspw. aus diesem Reinigungsmittelreservoir in die Reinigungsmitteltransportleitung und über diese in die Drei-Wege-Zusammenführung geleitet werden. Das Reinigungsmittelreservoir kann milchzufuhrvorrichtungsextern ausgebildet sein, aber auch ein in die Milchzufuhrvorrichtung integriertes Reinigungsmittelreservoir sein. Die Milchtransportleitung ist in der Regel an dem einen ihrer Enden lösbar mit dem Milchvorratsbehälter verbindbar bzw. verbunden.

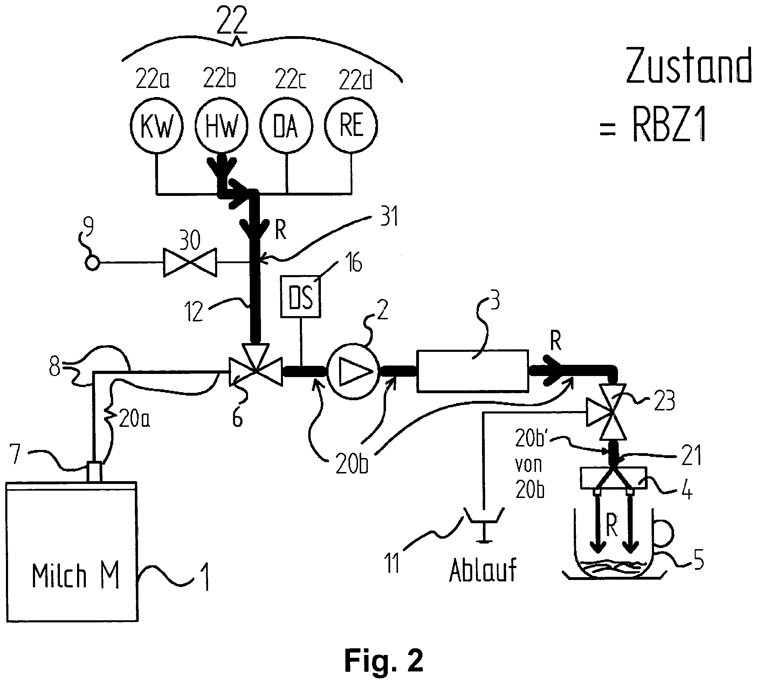

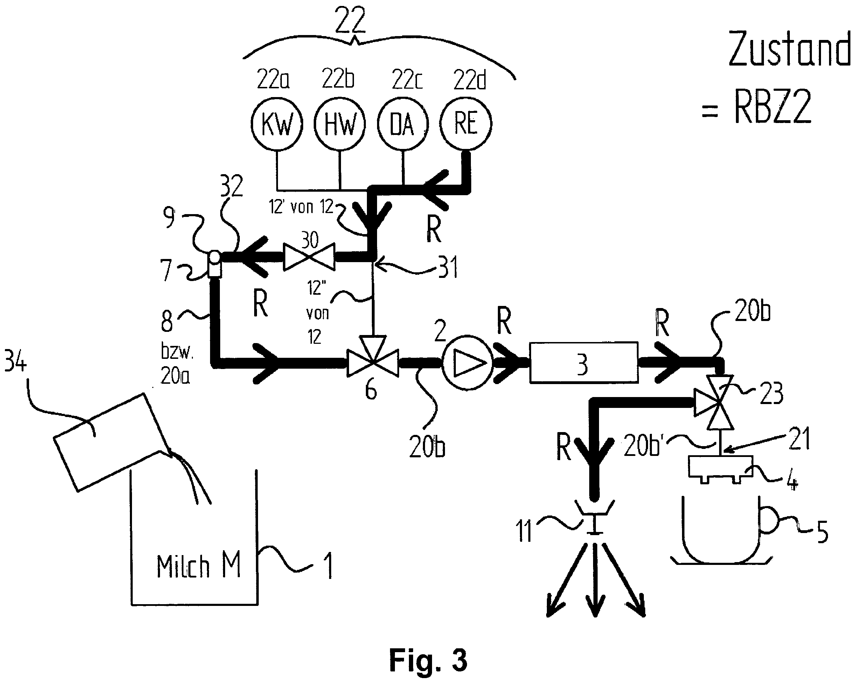

Dass Reinigungsmittel über die Drei-Wege-Zusammenführung in Richtung zur Milchausgabeeinrichtung hin leitbar ist, kann heißen, dass das Reinigungsmittel über einen Ausleitabschnitt der Milchtransportleitung so in die Milchausgabeeinrichtung (und aus dieser in ein externes Gefäß wie bspw. eine Tasse) geleitet wird, dass der Ausleitabschnitt komplett, also von Anfang bis Ende, gespült wird (also von der Drei-Wege-Zusammenführung bis einschließlich zum dieser gegenüberliegenden Ende des Ausleitabschnitts inklusive der Milchausgabeeinrichtung gespült wird). Vgl. dazu die nachfolgenden Ausführungsbeispiele gemäß der Fig. 2, 4 und 5. Es kann aber auch heißen (vgl. nachfolgendes Ausführungsbeispiel aus z. B. Fig. 3), dass Reinigungsmittel im Ausleitabschnitt mittels z. B. eines Ventils, das stromaufwärts der Milchausgabeeinrichtung positioniert ist, aus dem Ausleitabschnitt abgeleitet und über den Ablauf separat ausgeleitet wird (wobei dann ein kurzes Leitungsstück zwischen besagtem Ventil und der Milchausgabeeinrichtung nicht mit Reinigungsmittel gespült wird). Selbstverständlich können bspw. aber auch gleichzeitig sowohl der Ablauf als auch besagtes kurzes Leitungsstück gespült werden.

Jedenfalls kann erfindungsgemäß eine Fluidverbindung des Milchvorratsbehälters zur Milchzufuhrvorrichtung (bzw. zu Bauelementen derselben) unterbrochen werden, wenn sich die Milchzufuhrvorrichtung in dem bzw. in einem Reinigungsbetriebszustand befindet.

Erste vorteilhafterweise realisierbare Merkmale lassen sich Anspruch 2 entnehmen.

Das Fluid kann Milch sein (im Milchflussbetriebszustand) oder (in einem Reinigungsbetriebszustand, vgl. bspw. Fig. 3 oder 4) es kann ein Reinigungsmittel sein. Vorzugsweise ist die Drei-Wege-Zusammenführung hinsichtlich ihrer Fluidtransportrichtungen auch so umschaltbar, dass (bspw. nach Einleiten von Reinigungsmittel als Fluid aus der Reinigungsmitteltransportleitung über die Drei-Wege-Zusammenführung in die Milchtransportleitung) ein Ausleiten von Fluid aus der Drei-Wege-Zusammenführung in den Einleitabschnitt der Milchtransportleitung ermöglicht ist (vgl. hierzu bspw. das Ausführungsbeispiel gemäß Fig. 5 bzw., vgl. nachfolgend, den dritten Reinigungsbetriebszustand).

Weitere vorteilhafterweise realisierbare Merkmale lassen sich Anspruch 3 entnehmen.

Dieser erste Reinigungsbetriebszustand - ebenso aber auch evtl. noch vorhandene weitere Reinigungsbetriebszustände - kann/können mikroprozessorbasiert oder computerbasiert implementiert werden, bspw. mittels eines Mikrocontrollers, der einen Programmspeicher umfasst, in dem ein geeignetes Steuerprogramm ablegbar ist oder abgelegt ist. Der erste Reinigungsbetriebszustand beschreibt eine Flussvariante des Reinigungsmittels, wie sie bspw. in Fig. 2 gezeigt ist, die nachfolgend alternativ auch als Grundreinigung bezeichnet wird.

Weitere vorteilhafterweise realisierbare Merkmale lassen sich Anspruch 4 entnehmen.

Erfindungsgemäß weist der zweite Anschluss eine Leitung auf, die in die Reinigungsmitteltransportleitung einmündet. Besagte Einmündung kann bspw. als T-förmiges Leitungsstück ausgebildet sein. Die Einmündung der Leitung des zweiten Anschlusses in die Reinigungsmitteltransportleitung erfolgt zwischen einem/dem Reinigungsmittelreservoir und der Drei-Wege-Zusammenführung und/oder erfolgt fluidstromaufwärts der Drei-Wege-Zusammenführung.

Weitere vorteilhafterweise realisierbare Merkmale beschreibt Anspruch 5.

Dieser zweite Reinigungsbetriebszustand beschreibt eine Flussvariante von Reinigungsmittel, wie sie bspw. in Fig. 3 gezeigt ist, die nachfolgend alternativ auch als Schnellreinigung bezeichnet wird. Vorzugsweise erfolgt das Leiten des Reinigungsmittels in Richtung zur Milchausgabeeinrichtung hin so, dass das Reinigungsmittel noch stromaufwärts der Milchausgabeeinrichtung abgezweigt wird und über den in Bezug auf die Milchausgabeeinrichtung separat ausgebildeten Ablauf der Milchzufuhrvorrichtung aus letzterer abgeführt wird.

Weitere vorteilhafterweise realisierbare Merkmale lassen sich Anspruch 6 entnehmen.

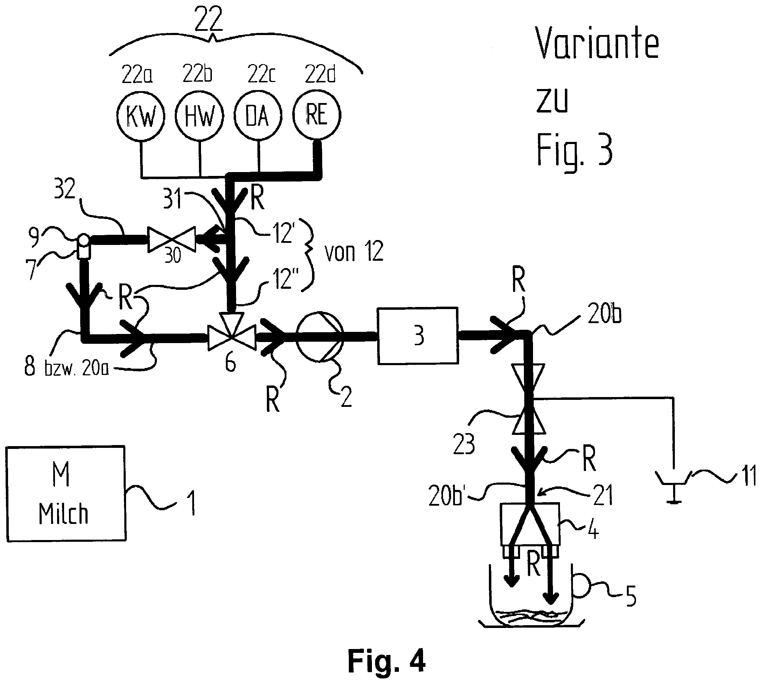

Diese Reinigungsbetriebszustand-Variante, die nachfolgend bspw. auch in Fig. 4 näher beschrieben wird, beschreibt eine Intensivreinigung. (Zusätzlich kann bei einer solchen Intensivreinigung auch noch der Milchvorratsbehälter gereinigt werden, sofern er kein Einweg-Behälter ist.) Vorzugsweise erfolgt das Leiten des Reinigungsmittels in Richtung zur Milchausgabeeinrichtung so, dass das Reinigungsmittel über die Milchausgabeeinrichtung in ein externes Gefäß abfließt (sodass die Milchausgabeeinrichtung auch gereinigt wird).

Weitere vorteilhafterweise realisierbare Merkmale lassen sich Anspruch 7 entnehmen.

Dabei kann die Verbindungszustand-Erkennungseinrichtung einen Sensor, vorzugsweise einen Hall- oder einen Reed-Sensor umfassen. Insbesondere kann ein Reinigungsbetriebszustand automatisiert ausgelöst werden, wenn die Verbindungszustand-Erkennungseinrichtung feststellt, dass eine fluiddichte Verbindung zwischen dem ersten Anschluss und dem zweiten Anschluss hergestellt ist. Die Verbindungslösungs-Verhinderungseinrichtung kann eine Verriegelungseinrichtung aufweisen, welche bspw. einen Aktor enthalten kann (bspw. Verriegelungsmotor oder Hubmagnet). Als zusätzliche Sicherheit kann die Verriegelungseinrichtung auch ein 3/2-Wege-Ausleitventil in Richtung Ablauf schalten und dafür sorgen dass eine/die Fördereinrichtung (z.B. Pumpe) nur eingeschaltet wird, wenn die Drei-Wege-Zusammenführung auf Reinigung steht.

Weitere vorteilhafterweise realisierbare Merkmale lassen sich Anspruch 7 entnehmen.

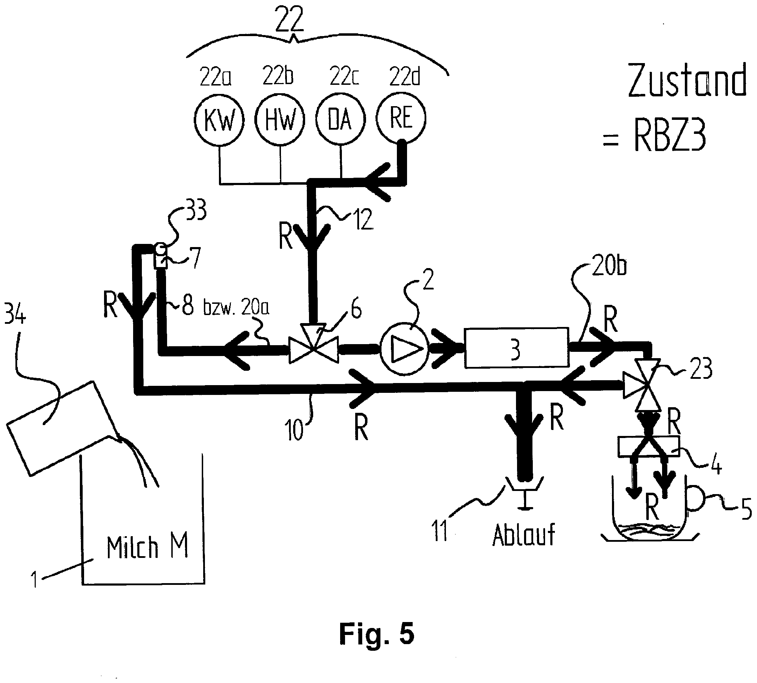

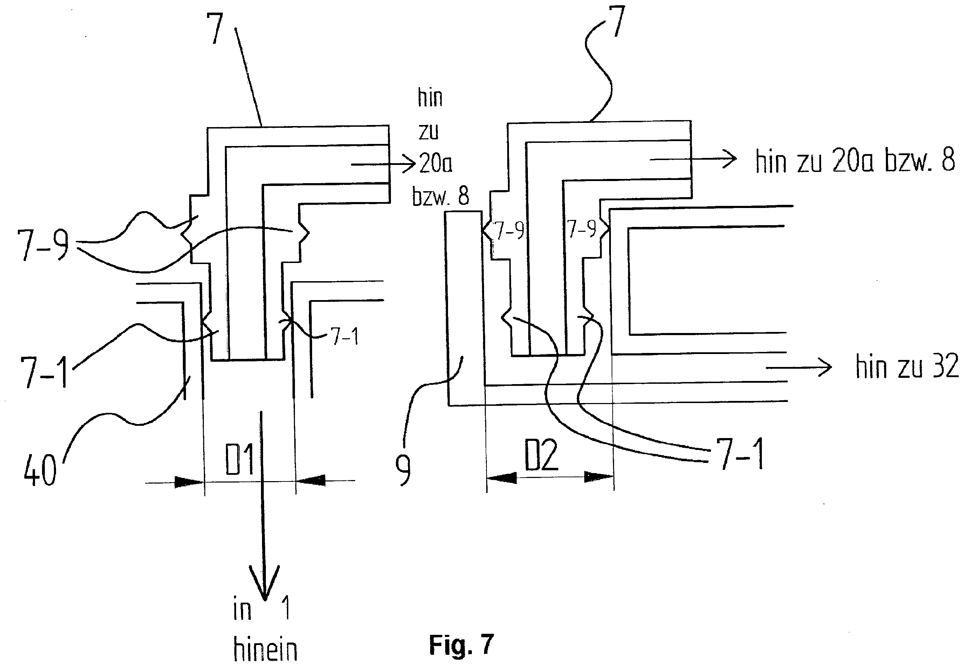

Der erste Anschlussabschnitt kann insbesondere zum fluiddichten Verbinden des ersten Anschlusses mit dem Milchvorratsbehälter ausgebildet sein. Dazu kann der erste Anschlussabschnitt mit einem Milchbehälter-Anschluss des Milchvorratsbehälters lösbar verbindbar sein. Bevorzugt sind der erste Anschlussabschnitt und der zweite Anschlussabschnitt so ausgebildet, dass im fluiddicht verbundenen Zustand des ersten Anschlusses und des zweiten Anschlusses der erste Anschlussabschnitt zumindest abschnittsweise, bevorzugt vollständig, von Reinigungsmittel umspülbar ist, das vom zweiten Anschluss in den ersten Anschluss (oder umgekehrt) fließt. Vgl. dazu auch Fig. 7. Ein dritter Anschluss (vgl. nachfolgend sowie Fig. 5) kann in derselben Form wie der zweite Anschluss ausgebildet werden, sodass über den zweiten Anschlussabschnitt ein Verpaaren des ersten Anschlusses auch mit dem dritten Anschluss möglich ist. Alternativ kann der zweite Anschlussabschnitt zum fluiddichten Verbinden des ersten Anschlusses mit dem dann anders ausgeformten dritten Anschluss ausgebildet werden.

Weitere vorteilhafterweise realisierbare Merkmale lassen sich Anspruch 8 entnehmen.

Die Bypassleitung kann somit teilweise (oder auch vollständig) auch eine starre Leitungsführung sein, bspw. eine feste Verrohrung.

Weitere vorteilhafterweise realisierbare Merkmale lassen sich Anspruch 9 entnehmen.

Auch gemäß dieses dritten Reinigungsbetriebszustands kann eine Intensivreinigung durchgeführt werden. Neben der hier beschriebenen Reinigungsmittelflussführung kann auch Reinigungsmittel über den Ausleitabschnitt der Milchtransportleitung in den Ablauf der Milchzufuhrvorrichtung geführt und/oder über die Milchausgabeeinrichtung der Milchzufuhrvorrichtung abgeführt werden.

Zum dritten Reinigungsbetriebszustand vgl. auch die in Fig. 5 gezeigte Flussvariante des Reinigungsmittels. Dabei kann die Drei-Wege-Zusammenführung so geschaltet werden, dass die Ausleitabschnittsseite (also der Ausleitabschnitt der Milchtransportleitung) von einem Fluidfluss abgetrennt wird. In diesem Fall wird lediglich der Einleitabschnitt der Milchtransportleitung (bzw. der erste Anschluss und ein flexibler Schlauch als Einleitabschnitt) gereinigt und Reinigungsmittel wird über die Bypassleitung und den Ablauf der Milchzufuhrvorrichtung aus letzterer abgeführt.

In einer Variante der Erfindung kann die Drei-Wege-Zusammenführung so geschaltet werden, dass auch die Ausleitabschnittsseite bzw. der Ausleitabschnitt der Milchtransportleitung für den Fluss von Reinigungsmittel geöffnet wird, sodass zusätzlich (vgl. Fig. 5) auch diese Ausleitabschnittsseite gereinigt wird. Um sowohl den Einleitabschnitt als auch den Ausleitabschnitt der Milchtransportleitung zu spülen, kann die Drei-Wege-Zusammenführung als 3/3-Wege-Ventil ausgebildet werden. (In der Regel sind nämlich zwei Schaltzustände notwendig, um die Reinigungsmitteltransportleitung mit dem Einleitabschnitt und/oder dem Ausleitabschnitt der Milchtransportleitung fluiddurchgängig zu verbinden; zusätzlich ist ein weiterer Schaltzustand notwendig, um die Reinigungsmitteltransportleitung fluiddicht gegenüber der Milchtransportleitung abzusperren und den Einleitabschnitt über die Drei-Wege-Zusammenführung mit dem Ausleitabschnitt fluiddurchlässig zu verbinden.)

Weitere vorteilhafterweise realisierbare Merkmale beschreibt Anspruch 10.

Dabei kann sowohl zwischen dem Milchflussbetriebszustand einerseits und einem der Reinigungsbetriebszustände andererseits (und umgekehrt) als auch zwischen unterschiedlichen Reinigungsbetriebszuständen gewechselt, insbesondere: umgeschaltet, werden. Damit ermöglicht die Erfindung zu unterschiedlichen Zeitpunkten bzw. in unterschiedlichen Zuständen der Milchzufuhrvorrichtung unterschiedliche Typen von Reinigungen (bspw.: Intensivreinigung oder Grundreinigung) durchzuführen.

Jeder Betriebszustand (Milchflussbetriebszustand und Reinigungsbetriebszustand/-zustände) ist dabei vorzugsweise ein Umschalt- bzw. Schaltzustand eines oder mehrerer Ventils/Ventile, vgl. auch nachfolgend. Die Drei-Wege-Zusammenführung kann somit so ausgebildet werden, dass neben dem Milchflussbetriebszustand nur genau ein (beliebiger der vorgenannten) Reinigungsbetriebszustand realisiert oder auswählbar ist, dass genau zwei (beliebige der vorgenannten) Reinigungsbetriebszustände realisiert oder auswählbar sind oder dass genau die drei vorgenannten Reinigungsbetriebszustände realisiert oder auswählbar sind. Es können (neben dem Milchflussbetriebszustand) selbstverständlich auch mehr als drei Reinigungsbetriebszustände im Rahmen der Erfindung (bevorzugt: programmgesteuert) realisiert werden, d.h. die Milchzufuhrvorrichtung kann in mehr als drei Reinigungsbetriebszuständen betrieben werden.

Anders ausgedrückt können vorteilhafterweise zwei, drei oder noch mehr unterschiedliche Reinigungsbetriebszustände wahlweise betrieben werden. Siehe auch nachfolgende Ausführungsbeispiele oder Figuren. Dabei kann Reinigungsmittel durch die Drei-Wege-Zusammenführung in unterschiedlichen Flussrichtungen hindurch geleitet werden, über unterschiedliche Einlässe derselben in die Drei-Wege-Zusammenführung hineinfließen und/oder über unterschiedliche Auslässe derselben aus der Drei-Wege-Zusammenführung wieder herausfließen.

Bspw. ist ein zweistufiger Reinigungsansatz möglich, bei dem in einer ersten Stufe Reinigungsmittel automatisiert (während der Einleitabschnitt der Milchtransportleitung bzw. während der flexible Schlauch über den ersten Anschluss an den Milchvorratsbehälter angeschlossen ist) durch die Milchzufuhrvorrichtung geleitet werden kann. Vgl. hierzu bspw. Fig. 2. In einer zweiten Stufe kann anschließend (wobei hierzu zuvor benutzerseitig der Einleitabschnitt der Milchtransportleitung bzw. der flexible Schlauch über den ersten Anschluss an den zweiten Anschluss angeschlossen wird) eine Schnellreinigung durchgeführt werden. Letztere wird von einem Benutzer nur unbewusst wahrgenommen: Aktiv muss lediglich der erste Anschluss an den zweiten Anschluss angeschlossen werden. Das Verkoppeln des zweiten Anschlusses mit dem ersten Anschluss kann sodann detektiert werden und anschließend kann die Schnellreinigung (vgl. z. B. Fig. 3) automatisch gestartet werden.

Besagte Detektion kann dabei elektromechanisch erfolgen: Bspw. kann ein Bajonettverschluss mit einem Nocken einen Mikroschalter betätigen. In einer anderen Variante haben der erste Anschluss und der zweite Anschluss jeweils einen elektrischen Kontakt; berühren sich die beiden elektrischen Kontakte beim mechanischen Koppeln, so kann ein Stromkreis geschlossen werden, was zur Detektion genutzt werden kann. Ebenso kann ein Magnetschalter oder ein Reed-Sensor verwendet werden.

Auch mehrstufige Reinigungsansätze mit mehr als zwei Stufen sind möglich.

Weitere vorteilhafterweise realisierbare Merkmale lassen sich den Ansprüchen 11 und 12 entnehmen.

Gemäß des letztgenannten Anspruchs ist (vgl. auch Fig. 2) zumindest während des ersten Reinigungsbetriebszustands ein solcher Rückfluss unerwünscht.

Eine Rückflusssicherungseinrichtung kann wie folgt realisiert werden: Bspw. kann eine Pumpe, die als Zahnradpumpe ausgebildet ist, rückwärts laufen. Sofern der durch den Drucksensor gemessene Druck zu gering ist bzw. unterhalb eines vordefinierten Drucks liegt, wird auf das Vorliegen eines unterwünschten Rückflusses erkannt. Alternativ dazu kann auf einen unerwünschten Rückfluss erkannt werden, wenn trotz eines Betriebs einer/der Pumpe in Vorwärtsrichtung der Drucksensor keinen ausreichenden Druck misst. (Selbstverständlich kann im Rahmen der Erfindung anstelle einer Pumpe auch eine beliebige andere Fluidfördereinrichtung verwendet werden.) Falls auf einen unerwünschten Rückfluss erkannt wird, kann bspw. eine Statusmeldung auf einem Bildschirm (also Display) der Milchzufuhrvorrichtung bzw. eines diese umfassenden Getränkebereiters ausgegeben werden. Auch kann auf einem solchen Bildschirm eine Alarmmeldung ausgegeben werden. Ein solcher Alarm kann auch akustisch (oder auch optisch, z.B. über ein Blinksignal) ausgegeben werden. Schließlich kann bei einem unerwünschten Rückfluss sogar die Milchzufuhrvorrichtung bzw. der Getränkebereiter automatisch abgeschaltet werden.

Weitere vorteilhafterweise realisierbare Merkmale lassen sich Anspruch 13 entnehmen.

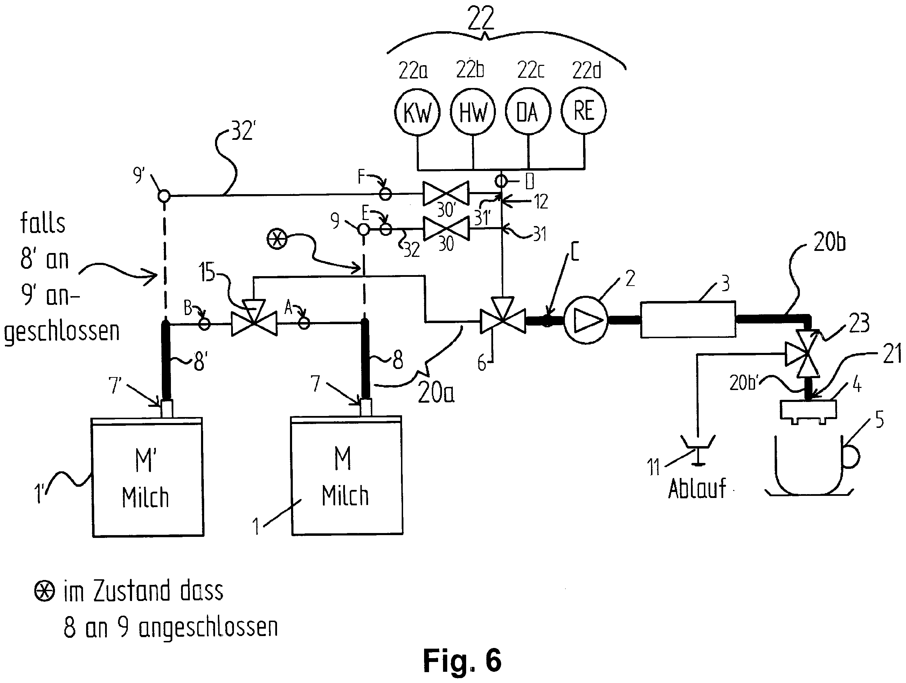

Die Milchzufuhrvorrichtung kann also zwischen verschiedenen Milchvorratsbehältern umschalten, je nachdem welche Art von Milch gewünscht ist (unterschiedliche Milchvorratsbehälter können bspw. mit unterschiedlichen Milchtypen, wie z. B. fettarmer Milch, normaler Milch und laktosefreier Milch, gefüllt sein). Im Milchflussbetriebszustand ist dabei jeweils Milch über die Drei-Wege-Zusammenführung aus dem aktuell angewählten Milchvorratsbehälter zur Milchausgabeeinrichtung transportierbar, während durch die Drei-Wege-Zusammenführung gleichzeitig die Milchtransportleitung fluiddicht gegen die Reinigungsmitteltransportleitung abgeschottet ist. Vgl. dazu auch die Ausführungsform gemäß Fig. 6.

Weitere vorteilhafterweise realisierbare Merkmale lassen sich Anspruch 13 entnehmen.

Die Scheibenelemente können flache (z. B. flachzylinderförmige) Körper sein. Es sind aber auch nicht flache, bspw. quaderförmige, Körper als Scheibenelemente denkbar. Die Scheibenebenen dieser flachen Körper sind dabei bevorzugt alle parallel zueinander und senkrecht zur Rotationsachse ausgerichtet. Die mehreren Leitungsanschlüsse können alle in/an genau einer der beiden Scheibenelemente ausgebildet werden. Mehrere in der vorliegenden Erfindung verwendete Ventile können somit gemeinsam durch die Vielfachanschluss-Einrichtung ausgebildet werden.

Einen erfindungsgemäßen Getränkebereiter beschreibt Anspruch 14, während ein erfindungsgemäßes Verfahren zum Zuführen von Milch der Anspruch 15 beschreibt.

Erfindungsgemäß kann somit eine hochgradig automatisierte Reinigung durchgeführt werden, ohne dass ein Eingriff in das Milchsystem (bzw. die Milchzufuhrvorrichtung) notwendig ist. Einzelne Bauelemente des Milchsystems, die nicht mit einbezogen werden können, können in einer Schnellreinigung während eines normalen Milchbefüllvorgangs kurz von Milchresten gespült und mit thermischen (oder auch chemischen) Mitteln desinfiziert werden. Das Bedienpersonal ist kaum bzw. gar nicht in der Zeit der Bedienung eingeschränkt und es muss außer dem typischen Milchbefüllvorgang praktisch keine zusätzlichen Tätigkeiten verrichten.

Wird der Einleitabschnitt als flexibler Schlauch ausgebildet, so kann bei in den Milchvorratsbehälter eingestecktem Milchanschlussschlauch der Milchzufuhrvorrichtung Reinigungsmittel auf eine sichere Art und Weise zugeführt werden, ohne dass die Gefahr einer Kontamination des Milchvorrats mit Reinigungsmittel besteht. Die Erfindung bietet somit ein Reinigungssystem für milchführende Teile einer Milchzufuhrvorrichtung bzw. einer Kaffeemaschine, wobei eine Reinigung dieser Teile komplett unabhängig von dem Milchvorratsbehälter vollständig bis zu diesem Behälter möglich ist. Damit ist ein hoher Automatisierungsgrad des Systems gegeben. Eine zeitlich versetzt stattfindende Reinigung der Milchzufuhrvorrichtung gegenüber dem Milchvorratsbehälter oder ein zeitlich versetzt stattfindendes Reinigen der Milchzufuhrvorrichtung mit dem Tausch des Milchvorratsbehälter erlaubt ohne Querkontamination von Anschlüssen am Vorratsbehälter mit der Milchzufuhrvorrichtung und umgekehrt eine optimierte Reinigung. Gemäß der Erfindung erfolgt dabei eine fluidtechnische Trennung des maschinenseitigen Milchsystems bzw. der Milchzufuhrvorrichtung einerseits vom Milchvorratsbehälter andererseits.

Die Milchzufuhrvorrichtung kann automatisiert gereinigt werden, wozu die Fluidverbindung zwischen Milchvorratsbehälter und Milchzufuhrvorrichtung unterbrochen wird (bspw. über ein Klemmventil, siehe nachfolgend) und ein Spül- oder Reinigungsmittel der Milchzufuhrvorrichtung zugeführt wird bzw. durch diese geführt wird. Der flexible Milchanschlussschlauch bzw. Einleitabschnitt der Milchtransportleitung kann mittels seines ersten Anschlusses (Adapter) in kurzen Pausen der Milchbefüllung des Milchvorratsbehälters oder während eines Milchvorratsbehälterwechsels mit hoher Intensität gereinigt werden.

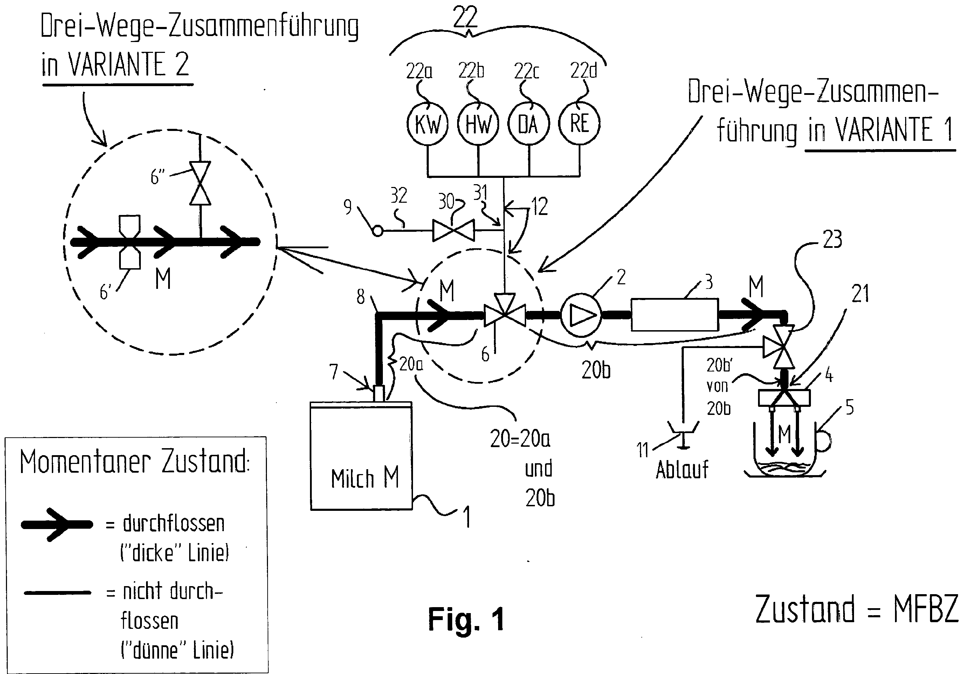

Nachfolgend wird die vorliegende Erfindung samt ihrer Vorteile noch anhand mehrerer Ausführungsbeispiele beschrieben. Dabei zeigen
Fig. 1 bis 4 ein erstes Ausführungsbeispiel einer erfindungsgemäßen elektrischen Kaffeemaschine mit einer erfindungsgemäßen Milchzufuhrvorrichtung (dabei sind nur die für die Erfindung wesentlichen Bauelemente der Kaffeemaschine und der Milchzufuhrvorrichtung gezeigt; dies gilt auch für die nachfolgenden Figuren bzw. Ausführungsbeispiele).
Fig. 5 eine zweite erfindungsgemäße elektrische Kaffeemaschine mit erfindungsgemäßer Milchzufuhrvorrichtung.
Fig. 6 eine dritte erfindungsgemäße elektrische Kaffeemaschine mit erfindungsgemäßer Milchzufuhrvorrichtung.
Fig. 7 einen ersten Anschluss und einen zweiten Anschluss, wie sie in den erfindungsgemäßen Milchzufuhrvorrichtungen der Fig. 1 bis 6 verwendet werden können.

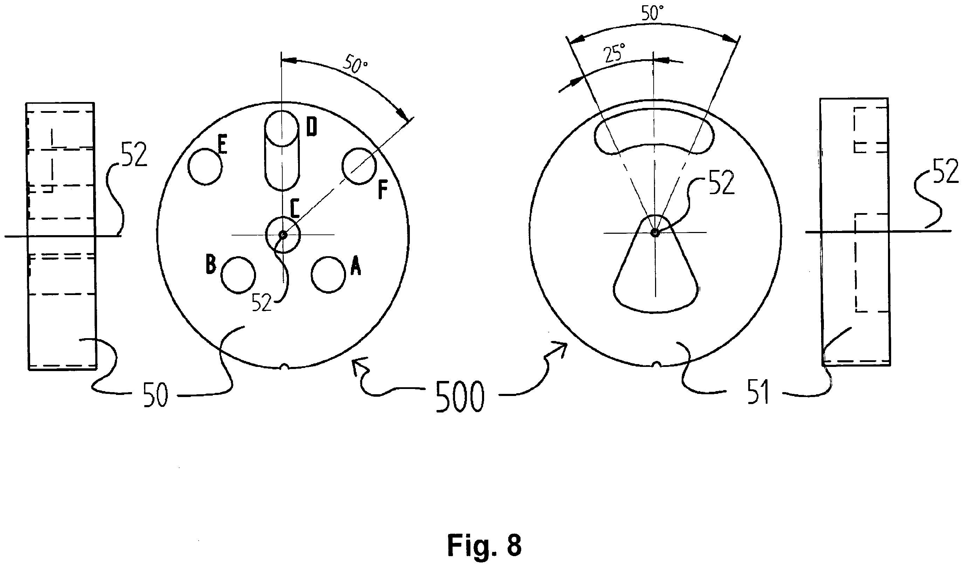

Fig. 8 bis 10 eine Vielfachanschluss-Einrichtung, die als erfindungsgemäße Drei-Wege-Zusammenführung eingesetzt werden kann, wie sie in sämtlichen erfindungsgemäßen Ausführungsbeispielen, besonders aber im dritten Ausführungsbeispiel gemäß Fig. 6, eingesetzt werden kann.

Die in Fig. 1 gezeigte Milchzufuhrvorrichtung des ersten Ausführungsbeispiels ist in einem Gehäuse (nicht gezeigt) einer elektrischen Kaffeemaschine (hier: Kaffeevollautomat) integriert. Außerhalb dieses Gehäuses befinden sich der maschinenexterne Milchvorratsbehälter (1), der über den ersten Anschluss (7) des flexiblen Schlauches (8) des Einleitabschnitts (20a) an die Milchtransportleitung (20) (umfassend den Einleitabschnitt (20a) und den Ausleitabschnitt (20b)) der Milchzufuhrvorrichtung angeschlossen werden kann. Somit befindet sich auch das dem ersten Anschluss (7) zugewandte Ende des flexiblen Schlauches (8) bzw. des Einleitabschnitts (20a) außerhalb der Kaffeemaschine, damit eine fluiddichte Verbindung zum Milchvorratsbehälter (1) ermöglicht ist und damit ein Benutzer besagtes Ende des Einleitabschnitts (20a) vermittels des ersten Anschlusses (7) fluiddicht mit dem zweiten Anschluss (9) verbinden kann (siehe nachfolgend).

Ebenfalls maschinen- bzw. kaffeevollautomatextern (also außerhalb des nicht dargestellten Gehäuses des Kaffeevollautomaten) befindet sich das externe Gefäß in Form einer Tasse (5). Im gezeigten Fall ist das mehrere Räume bzw. Kammern (22a) bis (22d) für unterschiedlichen Reinigungsmitteltypen R umfassende Reinigungsmittelreservoir (22) im Innern des Gehäuses des Vollautomaten angeordnet, wobei die einzelnen Räume bzw. Kammern (22a) bis (22d) über Klappen im Gehäuse zugänglich sind (nicht gezeigt).

In einer ersten Variante ("Variante 1") ist die Drei-Wege-Zusammenführung als 3/2-Wege-Ventil (6) ausgebildet. Siehe dazu den gestrichelt dargestellten Kreis im Zentrum von Fig. 1. Alternativ dazu kann in einer zweiten Variante des ersten Ausführungsbeispiels ("Variante 2") die Drei-Wege-Zusammenführung als Kombination aus genau zwei Ventilen, nämlich einem 2/2-Wege-Ventil (6") und einem Schlauchquetschventil (6') ausgebildet sein (vgl. gestrichelter Kreis links in Fig. 1). Es wird nachfolgend zunächst Variante 1 beschrieben, wobei Variante 2 genauso aufgebaut ist, sodass anschließend ausschließlich die Unterschiede zur Variante 1 beschrieben werden.

Ein Ende des Einleitabschnitts (20a) der Milchtransportleitung (20) ist somit vermittels des ersten Anschlusses (7) fluiddicht mit dem Milchvorratsbehälter (1) verbindbar (Fig. 1 zeigt diesen verbundenen Zustand). Das diesem Ende gegenüberliegende Ende des Einleitabschnitts (20a) ist mit einem der drei Eingänge des Ventils (6) verbunden (Variante 1). Im gezeigten Fall ist eine vollständig flexible Leitungsverbindung zwischen dem ersten Anschluss (7) und dem Ventil (6) gegeben, d. h. der Einleitabschnitt (20a) der Milchtransportleitung (20) ist entlang seiner gesamten Länge als flexibler Schlauch (8) ausgebildet. Ein zweiter Eingang des 3/2-Wege-Ventils (6) ist über den Ausleitabschnitt (20b) der Milchtransportleitung (20) mit der Milchausgabeeinrichtung (4) des Kaffeevollautomaten verbunden. Der erste Anschluss (7) entspricht somit einem ersten, dem Vorratsbehälter (1) zugewandten Ende (7) der Milchtransportleitung (20) und über das diesem ersten Ende (7) abgewandt liegende, zweite Ende (21) der Milchtransportleitung (20) kann das in der Milchtransportleitung (20) geführte Fluid an die Milchausgabeeinrichtung (4) und von dort in die externe Tasse (5) abgegeben werden. Die beiden Abschnitte (20a) und (20b) der Milchtransportleitung (20) sind somit über das Ventil (6) miteinander verbunden bzw. das Ventil (6) ist in der Milchtransportleitung (20) positioniert.

In Richtung vom Ventil (6) hin zur Milchausgabeeinrichtung (4) gesehen weist der Ausleitabschnitt (20b) in der nachfolgenden Reihenfolge die folgenden Bauelemente auf (d.h. ein im Abschnitt (20b) vom Ventil (6) zur Ausgabeeinrichtung (4) fließendes Fluid durchströmt diese Bauelemente in der nachfolgenden Reihenfolge): Ein Fluidfördermittel (2) (hier: Pumpe), ein System (3) zum Erhitzen des Fluids und/oder zum Einbringen von Luft und/oder zum Einbringen von Dampf in das Fluid (also z. B. zum Herstellen von warmer Milch oder von Milchschaum) und ein 3/2-Wege-Ausleitventil (23). Letzteres kann in einer ersten Schaltposition das Ausleiten von Fluid aus dem Ausleitabschnitt (20b) ausschließlich über die Milchausgabeeinrichtung (4) (also über ein kurzes, mit einem ersten Eingang des Ventils (23) verbundenes Leitungsstück (20b') des Abschnitts (20b), das sich zwischen dem Ventil (23) und der Milchausgabeeinrichtung (4) befindet) ermöglichen. Das Fluid fließt dann in die Tasse (5). In einer zweiten Schaltposition des Ventils (23) ist ausschließlich ein Ausleiten des Fluids über den separaten Ablauf (11) ermöglicht, in den ein zweiter Eingang des Ventils (23) führt. (Der dritte Eingang des Ventils (23) ist mit dem System (3) verbunden, dient also zum Einleiten von aus dem System (3) strömendem Fluid in das Ventil (23).) Der Ablauf (11) dient insbesondere dem Ableiten von Reinigungsmittel R als Fluid, vgl. nachfolgend. Schließlich kann das Ventil (23) in einer Zwischen-Schaltposition einen gleichzeitigen Fluidausfluss sowohl über den Ablauf (11) als auch über die Milchausgabeeinrichtung (4) ermöglichen.

Als Fördermittel (2) kann eine Pumpe (z. B. Zahnradpumpe) verwendet werden. Auch Peristaltikpumpen, Schwingankerpumpen oder Flügelzellenpumpen können als Fördermittel (2) eingesetzt werden.

Über den dritten Eingang des 3/2-Wege-Ventils (6) ist dieses (und somit die Milchtransportleitung (20)) mit einer Reinigungsmitteltransportleitung (12) verbunden. Auf der ihrem Eingang in das Ventil (6) abgewandt liegenden Seite der Leitung (12) ist das Reinigungsmittelreservoir (22) ausgebildet, das hier insgesamt vier verschiedene Reinigungsmittelbehälter als Räume (22a) bis (22d) aufweist. Aus jedem der Räume (22a) bis (22d) führt ein Ausgang in die Leitung (12), sodass vier unterschiedliche Reinigungsmittel aus dem Reservoir (22) in die Leitung (12) eingeströmt werden können. Als erstes Reinigungsmittel lässt sich dem Raum (22a) Kaltwasser KW entnehmen. Als zweites Reinigungsmittel lässt sich dem Raum (22b) Heißwasser HW entnehmen. Als drittes Reinigungsmittel lässt sich dem Raum (22c) Dampf DA entnehmen. Als viertes Reinigungsmittel lässt sich dem Raum (22d) eine Reinigungsflüssigkeit RE entnehmen. Jedes dieser Reinigungsmittel für sich oder auch Mischungen mehrerer dieser Reinigungsmittel können als Reinigungsmittel R (vgl. auch nachfolgend) der Leitung (12) zugesetzt werden.

Vom Reservoir (22) aus gesehen auf der dem Eingang der Leitung (12) ins Ventil (6) zugewandten Seite (zwischen dem Zusammenfluss aus den vier Räumen (22a) bis (22d) und dem Eingang ins Ventil (6)) mündet eine Leitung (32) über ein T-förmiges Leitungsstück (31) in die Leitung (12). Über die Leitung (32) ist der zweite Anschluss (9) der Milchzufuhrvorrichtung mit der Reinigungsmitteltransportleitung (12) verbunden, wobei zwischen dem zweiten Anschluss (9) und dem T-förmigen Leitungsstück ein 2/2-Wege-Ventil (30) in der Leitung (32) positioniert ist. Je nach Schaltzustand des Ventils (30) kann somit vom zweiten Anschluss (9) her kommendes Fluid durch die Leitung (32) und das T-Stück (31) in die Leitung (12) fließen oder nicht (im letzten Fall sperrt das Ventil (30)).

Fig. 1 zeigt den Milchflussbetriebszustand, nachfolgend mit MFBZ abgekürzt, der Milchzufuhrvorrichtung des ersten Ausführungsbeispiels. Dabei gilt hier wie auch für die nachfolgenden Figuren, dass dick gezeichnete und/oder mit Pfeilen versehene Leitungen bzw. Leitungsabschnitte im momentanen Zustand fluiddurchflossen sind, wohingegen dünn gezeichnete Leitungen bzw. Leitungsabschnitte und/oder nicht mit Pfeilen versehene Leitungen bzw. Leitungsabschnitte momentan nicht fluiddurchflossen sind.

Im MFBZ wird Milch M aus dem Behälter (1) über den ersten Anschluss (7) bzw. das erste Ende der Transportleitung (20) in den Schlauch (8) gefördert. Die Milch M fließt im Schlauch (8) bzw. dem Einleitabschnitt (20a) in das Ventil (6) und von dort in den Ausleitabschnitt (20b). Das Ventil (6) ist so geschaltet, dass der Eingang dieses Ventils zur Reinigungsmitteltransportleitung (12) sperrt, sodass ein Einfließen von Reinigungsmittel R (vgl. nachfolgende Figuren) aus dem Reservoir (22) bzw. aus der Leitung (12) in die Leitung (20) sicher verhindert wird. Für die Beförderung der Milch M sorgt die Pumpe (2), durch die die Milch M schließlich in das System (3) fließt (wo die Milch erhitzt werden kann, mit Dampf versetzt werden kann, mit Luft versetzt werden kann oder auch sowohl mit Dampf als auch mit Luft versetzt werden kann) und von dort in das Ventil (23) gefördert wird. Die Schaltstellung des Ventils (23) ist im gezeigten MFBZ so, dass die Milch M durch dieses Ventil (23) in den Leitungsabschnitt (20b'), von dort in die Ausgabeeinrichtung (4) und schließlich aus dieser (4) in die Tasse (5) fließt (der Eingang des Ventils zum Ablauf (11) hin sperrt somit im gezeigten MFBZ).

Analog zum Vorbeschriebenen arbeitet auch Variante 2 des ersten Ausführungsbeispiels, mit dem Unterschied, dass das Ventil (6) hier durch zwei einzelne Ventile, nämlich ein im Einleitabschnitt (20a) untergebrachtes Schlauchquetschventil (6') und ein in der Reinigungsmitteltransportleitung (12) untergebrachtes 2/2-Wege-Ventil (6") ersetzt ist. Ein einfaches, T-förmiges Leitungsstück verbindet dabei den Einleitabschnitt (20a), den Ausleitabschnitt (20b) und die Transportleitung (12), vgl. gestrichelter Kreis links im Bild. Im gezeigten MFBZ sperrt somit das 2/2-Wege-Ventil (6") jegliche Reinigungsmittelzufuhr vom Reservoir (22), wohingegen das Schlauchquetschventil (6') geöffnet ist, um den Durchfluss von Milch M durch die Leitung (20) zu ermöglichen.

Figur 1 zeigt somit ein Milchsystem, bei dem Milch M in einem Milchbehältnis 1 aufbewahrt wird. Die Milch M wird über den Einleitabschnitt (20a) bzw. den flexiblen Schlauch (8) mittels des Fördermittels (2) zu einem Auslaufbereich (Milchausgabeeinrichtung (4)) gefördert. Zwischen Milchbehältnis (1) und Auslaufbereich (4) können sich (Bezugszeichen 3) Erhitzersysteme oder Systeme für die Einbringung von Luft und/oder Dampf zur Zubereitung von warmer Milch oder von Milchschaum befinden. Diese Systeme (3) sind hier nur schematisch dargestellt. Die Systeme (3) können auch weggelassen werden (dann ist lediglich ein Zusetzen von Milch M in der im Behälter vorliegenden Form bzw. Temperatur möglich).

Der Milchansaugschlauch (8) ist mittels eines Anschlussstücks bzw. des Anschlusses (7) am Milchvorrat (1) angekoppelt bzw. daran ankoppelbar. Über eine Zufuhreinrichtung bzw. Zuführleitung für Reinigungs- oder Spülmittel (12) kann das System gespült oder gereinigt werden. Damit in den Milchvorrat (1) und in die in der Milchtransportleitung (20) fließende Milch kein Reinigungsmittel R eindringt, ist die Milchzufuhr- bzw. Milchtransportleitung (20) zwischen dem Bereich der Reinigerzuführung (also der Einmündung der Leitung (12) in die Leitung (20)) und dem Milchvorrat (1) mit einer Trennvorrichtung (6) bzw. (6', 6") abgetrennt.

In Variante 1 besteht die Trennvorrichtung (6) aus einem 3/2-Wege-Ventil (es kann aber auch ein 3/3-Wege-Ventil verwendet werden). In Variante 2 besteht die Trennvorrichtung (6', 6") aus einer Kombination eines Schlauchquetschventils (6') und eines 2/2-Wege-Ventils (6") für die Reinigungszuführung. Das maschinenseitige Milchsystem kann damit, mit Ausnahme des Anschlussschlauchstücks bis zur Position (6) bzw. (6') vollautomatisiert gereinigt werden. Dabei sitzt bei Variante 1 die Trennstelle nicht in einem Blindpfad während der Reinigung (diesbezüglich ist Variante 1 also besser als Variante 2, da bei letzterer ein solcher Blindpfadabschnitt besteht).

Zur Überwachung der Dichtfunktion der Trennstelle kann auf das zu reinigende System (beispielsweise mittels der Fördervorrichtung (2)) ein Druck aufgebaut werden. Ein solcher Druckaufbau kann mit einem Drucksensor (16) (vgl. Figur 2, in Figur 1 ist dieser Sensor (16) aus Übersichtlichkeitsgründen nicht gezeigt, jedoch vorhanden) detektiert werden. Der Sensor (16) misst dabei den in der Leitung (20) bzw. deren Ausleitabschnitt (20b) zwischen der Drei-Wege-Zusammenführung (6) bzw. (6', 6") einerseits und der Fördervorrichtung (2) andererseits bestehenden Druck. Der Druck kann dabei z. B. aufgebracht werden, indem man die Fördervorrichtung (2) als Zahnradpumpe ausbildet und diese rückwärts laufen lässt. Stellt der Sensor (16) dann fest, dass der Druck nicht ausreichend hoch ist, so besteht ein Leck durch die Trennstelle (6) bzw. (6', 6") in Richtung hin zum Schlauch (8). In einem solchen Fall kann die Milchzufuhrvorrichtung eine Warnung oder einen Alarm auslösen. Alternativ dazu kann im Fluidflusszustand der Figur 2 (vgl. nachfolgend) festgestellt werden, dass ein unerwünschtes Leck im Bereich der Trennstelle (6) bzw. (6', 6") vorliegt (was zu einer Verunreinigung von Milch M mit Reinigungsmittel R führen könnte), wenn der Sensor (16) trotz Pumpenbetriebs bezüglich des Reinigungsmittels R keinen ausreichend hohen Druck misst (also der Wert des Drucks unterhalb eines vorbestimmten Druck-Sollwertes liegt): In einem solchen Fall fehlt es am ausreichenden Druck, weil über die Trennstelle Fluid bzw. Flüssigkeit in Richtung des Schlauches (8) bzw. zum Ende (7) hin übertritt.

In Figur 2 ist ein Grundreinigungszustand bzw. der erste Reinigungsbetriebszustand (nachfolgend als "RBZ1" bezeichnet) gezeigt, bei dem Folgendes passiert.

Die Drei-Wege-Zusammenführung (6) bzw. (6', 6") wird so geschaltet, dass Reinigungsmittel R (herstammend aus dem Reservoir (22), hier aus dem Reservoirteil (22b)) über die Transportleitung (12) und den mit dieser verbundenen Eingang der Zusammenführung (6) sowie über den mit dem Ausleitabschnitt (20b) verbundenen Eingang der Zusammenführung (6) in den Ausleitabschnitt (20b) fließt. Somit sperrt der mit dem Einleitabschnitt (20a) verbundene Eingang der Zusammenführung (6). Das Reinigungsmittel R durchfließt die Pumpe (2), das System (3), das Ausleitventil (23) sowie den Abschnitt (20b') und fließt somit über das Ende (21) der Milchtransportleitung (20) in die Milchausgabeeinrichtung (4) und von dort in die Tasse (5). Bei dieser Grundreinigung werden somit die Leitung (12), der Leitungsabschnitt (20b) (samt der darin befindlichen Elemente (2, 3, 23)) sowie die Ausgabeeinrichtung (4) gereinigt. Das Milchsystem kann somit unabhängig vom Vorratsbehälter (1) einer Grundreinigung unterzogen werden.

Der verbleibende Schlauchabschnitt (8) samt erstem Anschluss (7) am Milchbehälter (1) unterliegt in der Praxis einer kleineren Verschmutzung wie das Fördermittel (2) sowie das System (3): Bezüglich der Elemente (2, 3) muss aber sichergestellt werden, dass kein Milchaufbau über Proteine stattfindet und dass sich keine Keime bilden können bzw. dass diese nach ihrem Wachstum zeitnah wieder auf eine verträgliche Menge abgebaut werden. Die Grundreinigung RBZ1 kann in Pausenzeiten durchgeführt werden. Der erste Anschluss (7) kann während dieser Zeit auch in seine Parkposition gesteckt werden, d. h. mit dem zweiten Anschluss (9) verbunden werden. (Siehe dazu auch Figur 3.) Die Grundreinigung RBZ1 kann einmal täglich oder in Betriebspausen oder wenig frequentierten Zeiten durchgeführt werden. Sie kann auch in Verbindung mit der täglichen Kaffeemaschinenreinigung ablaufen. Es ist keine manuelle Reinigung des Benutzers notwendig. Beispielsweise kann das Grundreinigungsprogramm zu RBZ1 (hinterlegt im Speicher der Kaffeemaschine) an einem Display der Kaffeemaschine (nicht gezeigt) gestartet werden. Eine typische Zeitdauer ist 5 bis 15 Minuten.

Figur 3 zeigt den zweiten Reinigungsbetriebszustand (mit RBZ2 abgekürzt). Dieser stellt hier eine Schnellreinigung dar.

Im RBZ2 ist der erste Anschluss (7) fluiddicht mit dem zweiten Anschluss (9) verbunden. Die Zusammenführung (6) ist so geschaltet, dass der mit dem Einleitabschnitt (20a) verbundene Eingang der Zusammenführung (6) und der mit dem Ausleitabschnitt (20b) verbundene Eingang der Zusammenführung (6) durchlässig geschaltet sind. Somit sperrt der mit der Transportleitung (12) verbundene Eingang der Zusammenführung (6). Das Ventil (30) ist offen geschaltet. Somit kann Reinigungsmittel R aus dem Reservoir (22) (hier aus dem Teil (22d)) über einen Abschnitt (12') der Leitung (12), der sich zwischen dem Reservoir (22) und der Einmündung (31) befindet, in das Ventil (30) strömen, von dort (in der Leitung (32) über den zweiten Anschluss (9) und den ersten Anschluss (7) in den Schlauch (8) bzw. den Einleitabschnitt (20a), durch die Zusammenführung (6) und in den Ausleitabschnitt (20b).

Im Ausleitabschnitt (20b) strömt das Reinigungsmittel R durch das Fördermittel (2), das System (3) und das Ventil (23). Letzteres ist hier so geschaltet, dass das Reinigungsmittel R über den Ablauf (11) abgeführt wird. Mit anderen Worten wird im in Figur 3 gezeigten Zustand der Teil (20b') des Ausleitabschnitts (20b) (und somit auch die Ausgabeeinrichtung (4)) nicht gereinigt. Selbstverständlich kann das Ventil (23) aber auch so geschaltet werden, dass sowohl der Ablauf (11), als auch die Elemente (20b') und (4) von Reinigungsmittel R durchflossen werden. Ebenfalls ungereinigt bleibt im dargestellten Zustand derjenige Leitungsabschnitt (12") der Transportleitung (12), der zwischen der Einmündung (31) und dem Eingang der Zusammenführung (6) zur Leitung (12) hin besteht.

Die Schnellreinigung RBZ2 kann mehrmals täglich während des Befüllens (über einen weiteren externen Behälter (34) des Milchvorratsbehälters (1)) durchgeführt werden. Ein Nachfüllen der Milch M in den Behälter (1) kann somit erfolgen, wenn die beiden Anschlüsse (7) und (9) fluiddicht miteinander gekoppelt sind. Dieses Spülen RBZ2 des Milchpfades (20a), (20b) benötigt eine typische Zeitdauer von 1 bis 2 Minuten. Im Zustand RBZ2 kann somit auch der Schlauch (8) samt Anschluss (7) einer Reinigung unterzogen werden. Dabei kann über die Leitung (12) (Abschnitt (12')) die Strecke gespült werden und das Reinigungsmittel R kann über den Ablauf (11) abfließen. Selbstverständlich können auch die anderen Reinigungsmittel der Reservoirkammern (22a) bis (22c) bei entsprechender Steuerung der Vorrichtung als Reinigungsmittel R den in Figur 3 gezeigten Weg durchströmen.

Der zweite Anschluss (9) oder auch der erste Anschluss (7) kann Sensorik enthalten (beispielsweise in Form eines Reed- oder Hall-Sensors). Diese Sensorik kann erkennen, ob eine fluiddichte Kopplung der Elemente (7) und (9) besteht. Die Sensorik kann, sofern eine solche Kopplung besteht, automatisiert den in Figur 3 gezeigten Spülzyklus auslösen. Damit nicht versehentlich vor dem Ende eines solchen Spülzyklus die Verbindung der Elemente (7) und (9) gelöst wird, kann auch ein Aktor vorgesehen sein, der als Verriegelungshilfe dient (beispielsweise Verriegelungsmotor, Elektromagnet oder eine hydraulisch oder pneumatisch unterstützte Verriegelungshilfe). Vereinfacht kann stattdessen auch ein optisches Mittel (Zustandsanzeige auf einem Display der Vorrichtung) vorgesehen sein, das signalisiert, ob der Reinigungsvorgang abgeschlossen ist oder nicht. Dies kann beispielsweise (anstelle einer Anzeige am Display) auch in Form einer Beleuchtung am Anschlussbereich erfolgen. Die Zustandsanzeige kann auch in Form einer Animation am Display erfolgen.

Insbesondere mit dem Zustand RBZ2 wird sichergestellt, dass das Milchsystem bzw. die Milchzufuhrvorrichtung hochautomatisiert gereinigt werden kann, wobei regelmäßig auch der Milchanschluss gereinigt wird. Kann über eine längere Zeitdauer der erste Anschluss (7) (mit dem Schlauch (8)) nicht gereinigt werden, da beispielsweise eine sehr große Menge Milch M im Behälter (1) bevorratet ist oder einfach ein geringer Verbrauch an Milch stattfindet, so kann die Milchzufuhrvorrichtung auch für eine Zwangsspülung ausgebildet werden, bei der der Benutzer aufgefordert wird, den Spülzyklus RBZ2 zu initiieren: Hierzu muss der Benutzer lediglich händisch die beiden Anschlüsse (7) und (9) miteinander verbinden.

Figur 4 zeigt in einer Variante des ersten Ausführungsbeispiels eine erfindungsgemäße Milchzufuhrvorrichtung in einem Kaffeevollautomaten, die die Möglichkeit einer Intensivreinigung bietet. Der Aufbau folgt hierbei dem in Figuren 1 bis 3 gezeigten Aufbau mit lediglich dem Unterschied, dass die Drei-Wege-Zusammenführung (6) hier als 3/2-Wege Ventil ausgebildet ist.

Die Schaltstellungen bei dieser Intensivreinigung sind so, dass sowohl der Eingang des Ventils (6), der mit der Transportleitung (12) (bzw. dem Abschnitt (12") derselben) verbunden ist, als auch der Eingang des Ventils (6), der mit dem Einleitabschnitt (20a) bzw. dem Schlauch (8) verbunden ist, zum Zufluss von Reinigungsmittel R geöffnet ist. Das Mittel R stammt hier aus der Kammer (22d) des Reservoirs (22). Es kann zyklisch zwischen folgenden Zuständen hin und her geschaltet werden: In einem ersten Zustand fließt Reinigungsmittel R über die Einmündung (31), das Ventil (30), die beiden Anschlüsse (9), (7) und den Schlauch (8) in das Ventil (6). In einem zweiten Zustand fließt Reinigungsmittel direkt von der Einmündung (31) über den Abschnitt (12") in das Ventil (6). Der mit dem Ausleitabschnitt (20b) verbundene Eingang des Ventils (6) ist ebenfalls geöffnet und dient dem Ausleiten des im Ventil (6) aus den Leitungsabschnitten (8) und (12") zusammengeflossenen Reinigungsmittels R. Die Ableitung des Reinigungsmittels R stromabwärts der Elemente (2), (3 und (23) erfolgt hier über den Abschnitt (20b'), also durch die Ausgabeeinrichtung (4). Das 3/2-Wege-Ausleitventil (23) kann aber auch so geschaltet sein, dass Reinigungsmittel R zusätzlich auch über den Ablauf (11) ausgeleitet wird.

Die gezeigte Intensivreinigung kann als chemische und/oder mechanische Reinigung einmal wöchentlich durchgeführt werden. Alle Bauelemente, die mit Milch in Berührung kommen, können dabei gereinigt werden. Es ist ein Verwenden von Reinigungs- und/oder Desinfektionsmittel R auch in hoher Konzentration möglich. Auch sind lange Einwirkzeiten (Zeitdauer: 15 bis 30 Minuten oder auch länger, z. B. 1 bis 2 Stunden) möglich. Es kann, sofern gewünscht, auch eine Demontage von Bauelementen bzw. Bauteilen zur manuellen Reinigung oder zur Reinigung in einer Spülmaschine erfolgen. Der Milchvorratsbehälter (1) ist im in Fig. 4 gezeigten Zustand von der Milchzufuhrvorrichtung entkoppelt.

Figur 5 zeigt ein zweites Ausführungsbeispiel für eine erfindungsgemäße Milchzufuhrvorrichtung in einem Kaffeevollautomaten. Der Aufbau ist dabei grundsätzlich ebenso wie im ersten Ausführungsbeispiel, so dass nachfolgend nur die Unterschiede beschrieben werden (identische Bezugszeichen beschreiben identische bzw. entsprechende Bauelemente wie beim ersten Ausführungsbeispiel).

Im zweiten Ausführungsbeispiel entfallen die Bauelemente (9), (30), (31) und (32). Zusätzlich (im ersten Ausführungsbeispiel nicht vorhanden) ist eine flexible, abschnittsweise flexible oder auch vollständig starre (letzteres als Verrohrung) Bypassleitung (10) vorgesehen, die an einem ihrer Enden mit dem Ablauf (11) verbunden ist bzw. in den Ablauf (11) führt. An dem dem Ablauf (11) gegenüberliegenden Ende weist die Bypassleitung (10) einen dritten Anschluss (33) auf, der mit dem ersten Anschluss (7) lösbar verbunden werden kann. Figur 5 zeigt einen Zustand, in dem der dritte Anschluss (33) und der erste Anschluss (7) fluiddicht miteinander verbunden sind. Im Ausführungsbeispiel aus Figur 5 ist zudem die Zusammenführung (6) als 3/3-Wege-Ventil ausgebildet.

Mit der in Figur 5 gezeigten Ausführungsform kann ebenfalls eine Intensivreinigung, die nachfolgend auch als dritter Reinigungsbetriebszustand, abgekürzt: RBZ3, bezeichnet ist, durchgeführt werden. Hierzu eröffnet das Ventil (6) sowohl den Einleitabschnitt (20a) als auch den Ausleitabschnitt (20b) zum Durchströmen mit Reinigungsmittel R. Reinigungsmittel R kann somit aus der Transportleitung (12) in das Ventil (6) und über den Schlauch (8) bzw. Einleitabschnitt (20a), den ersten Anschluss (7), den dritten Anschluss (33) und die Bypassleitung (10) in den Ablauf (11) fließen. Gleichzeitig kann in RBZ3 Reinigungsmittel R aus der Leitung (12) über das Ventil (6) auch durch das Fördermittel (2), das System (3), das Ventil (23) und die Milchausgabeeinrichtung (4) in die Tasse (5) fließen. In RBZ3 ist das 3/3-Wege-Ventil (23) so geschaltet, dass sämtliche seiner drei Eingänge eröffnet sind. Daher fließt Reinigungsmittel R auch noch über das Ventil (23) in den Ablauf (11).

Die Milchzufuhrvorrichtung aus Figur 5 kann aber auch für eine schnelle Reinigung genutzt werden, wenn das Ventil (6) ausschließlich den Pfad (20a) eröffnet (Reinigungsmittelfluss nur über die Elemente (8), (7), (33) und (10) in den Ablauf (11)).

Figur 6 zeigt ein drittes Ausführungsbeispiel für eine Milchzufuhrvorrichtung in einem Kaffeevollautomaten gemäß der Erfindung. Ebenso wie im ersten Ausführungsbeispiel sind mit dem dritten Ausführungsbeispiel die Zustände MFBZ, RBZ1 und RBZ2 und in Analogie zu Figur 4 auch der in letztgenannter Figur gezeigte Reinigungsbetriebszustand möglich. Dies indem, insbesondere vermittels der Drei-Wege-Zusammenführung (6) zwischen den einzelnen Betriebszuständen umgeschaltet werden kann. Das Ventil (6) ist im dritten Ausführungsbeispiel als 3/3-Wege-Ventil ausgebildet.

Die dritte Ausführungsform (Figur 6) weist sämtliche Bauelemente der ersten Ausführungsform (Figuren 1 bis 3) auf. Darüber hinaus sind zusätzliche Bauelemente (7'), (8'), (9'), (30'), (31'), (32') und (15) vorgesehen und es bestehen die folgenden Unterschiede. Neben einem (ersten) Milchvorratsbehälter (1) ist ein zweiter Milchvorratsbehälter (1'), in dem hier eine andere Milchsorte M' eingefüllt ist, vorgesehen. Der Einleitabschnitt (20a) umfasst neben dem ersten Anschluss (7) und dem damit verbundenen flexiblen Schlauch (8) (zur Verbindung mit dem Behälter (1)) einen weiteren ersten Anschluss (7'), der mit einem weiteren flexiblen Schlauch (8') verbunden ist. Über die Elemente (7') und (8') ist der Einleitabschnitt (20a) zusätzlich (neben der Verbindung zum Behälter (1)) auch mit dem weiteren externen Behälter (1') verbunden. Hierzu ist ein weiteres 3/2-Wege-Ventil (15) vorgesehen, das einen ersten Eingang aufweist, der mit dem zum weiteren ersten Anschluss (7') abgewandt liegenden Ende des Schlauches (8') verbunden ist, und das einen zweiten Eingang aufweist, der mit dem zum ersten Anschluss (7) abgewandt liegenden Ende des Schlauches (8) verbunden ist. Der dritte Eingang des Ventils (15) ist über einen starren Rohrleitungsabschnitt des Einleitabschnitts (20a) mit demjenigen Eingang des Ventils (6) verbunden, der nicht mit der Leitung (12) und nicht mit dem Ausleitabschnitt (20b) verbunden ist. Das Ventil (15) und dieser starre Rohrleitungsabschnitt sind dabei innerhalb eines (hier nicht gezeigten) Gehäuses des Kaffeevollautomaten so positioniert, dass lediglich die dem Ventil (15) abgewandt liegenden Abschnitte der Schläuche (8) und (8') mit ihren Anschlüssen (7) und (7') außerhalb besagten Gehäuses positioniert sind.

Wie vorangehend zum ersten Ausführungsbeispiel beschrieben, kann der erste Anschluss (7) mit dem zweiten Anschluss (9) fluiddicht verbunden werden. Siehe hierzu die gestrichelte Linie zwischen (7) und (9). Zusätzlich weist der Vollautomat einen weiteren zweiten Anschluss (9') auf, der über eine weitere Leitung (32') sowie ein weiteres 2/2-Wege-Ventil (30') (das wie das Ventil (30) aufgebaut ist) über eine weitere Einmündung (31') in die Transportleitung (12) mündet. Die weitere Einmündung (31') ist dabei ebenfalls als T-förmiges Leitungsstück ausgebildet und zwischen dem Reservoir (22) einerseits und der Einmündung (31) andererseits positioniert. Der weitere zweite Anschluss (9') ist so ausgebildet, dass er, nach einem Abnehmen des weiteren ersten Anschlusses (7') vom Milchbehälter (1'), mit dem weiteren ersten Anschluss (7') fluiddicht verbunden werden kann. Siehe hierzu die gestrichelte Linie zwischen (7') und (9').

Je nach Schaltstellung des Ventils (15) kann im Milchflussbetriebszustand MFBZ (wenn (7) und/oder (7') im verbundenen Zustand mit den Milchbehältern (1), (1') ist/sind) entweder Milch M' aus dem Behälter (1') oder Milch M aus dem Behälter (1) über das Ventil (15) über den Einleitabschnitt (20a) und das Ventil (6) in den Ausleitabschnitt (20b) (bei gesperrtem Eingang des Ventils (6) zur Leitung (12) hin) fließen.

Reinigungsbetriebszustände, RBZ, sind dadurch möglich, dass der erste Anschluss (7) mit dem zweiten Anschluss (9) verpaart wird und/oder der weitere erste Anschluss (7') mit dem weiteren zweiten Anschluss (9') verpaart wird. Hierbei können dann die im MFBZ geschlossenen Ventile (30) und (30') geöffnet sein.

Beispielsweise ist ein Intensivreinigungszustand wie in der Variante des ersten Ausführungsbeispiels gemäß Figur 4 gezeigt möglich: Verpaarung der Anschlusspaare (7) und (9) sowie (7') und (9'), d. h. Abkopplung von den Behältern (1) und (1'). Öffnen der beiden Ventile (30) und (30'). Schaltung des 3/2-Wege-Ventils (15) so, dass ein Zufluss entweder aus dem Schlauch (8) oder aus dem Schlauch (8') und ein Abfluss hin zum Ventil (6) ermöglicht ist. Schalten des Ventils (6) so, dass entweder ein Zufluss aus dem Einleitabschnitt (20a) bzw. vom Ventil (15) her oder aus der Transportleitung (12) ermöglicht ist (zwischen diesen beiden Zuständen kann zyklisch hin und her geschaltet werden). Das ins Ventil (6) geflossene Reinigungsmittel fließt über den Ausleitabschnitt (20b) ab. Andere RBZ, so z. B. ein Zustand analog zu RBZ2 gemäß Figur 3 (in diesem Fall sperrt der Eingang des Ventils (6), der mit der Leitung (12) verbunden ist) sind ebenfalls möglich.

Somit kann die erfindungsgemäße Milchzufuhrvorrichtung auch für mehrere Milchbehälter (1), (1') ausgeweitet werden, wobei das Ventil (15) zum Umschalten zwischen den verschiedenen Milchbehältern eingesetzt werden kann. Das Ventil (15) kann alternativ auch aus zwei einzelnen 2/2-WegeVentilen oder aus zwei Schlauchklemmventilen aufgebaut werden. Um eine gewünschte parallele Schnell- und Intensivreinigung zu ermöglichen, ist die zusätzliche Verbindung über die Anschlüsse (7') und (9') vorgesehen.

Figur 6 zeigt zudem sechs Leitungsanschlüsse A, B, C, D, E und F einer Vielfachanschluss-Einrichtung (500), wie sie nachfolgend in den Figuren 8 bis 10 beschrieben ist. Je nach Stellung der Einrichtung (500) sind unterschiedliche Durchflusszustände der in Figur 6 gezeigten Milchzufuhrvorrichtung ermöglicht. Siehe hierzu auch nachfolgende Beschreibung zu den Figuren 8 bis 10.

Figur 7 zeigt im Detail, wie der erste Anschluss (7) und der zweite Anschluss (9) (ebenso: der weitere erste Anschluss (7') und der weitere zweite Anschluss (9') gemäß Figur 6) ausgebildet sein können. Der erste Anschluss (7) weist an seinem dem Schlauch (8) abgewandt liegenden Ende (und in Richtung vom Schlauch (8) weg gesehen) zunächst einen zweiten Anschlussabschnitt (7-9) und danach einen ersten Anschlussabschnitt (7-1) auf. Der Durchmesser des ersten Anschlussabschnitts (7-1) ist so ausgebildet, dass er formschlüssig sowie fluiddicht abdichtend in einen Milchbehälter-Anschluss (40) des Behälters (1) (in den Figuren 1 bis 6 nicht gezeigt) eingeführt werden kann. Der zweite Anschlussabschnitt (7-9) weist einen größeren Durchmesser als der erste Anschlussabschnitt (7-1) auf. Der Durchmesser des zweiten Anschlussabschnitts (7-9) ist um so viel größer, als der Innendurchmesser des Milchbehälter-Anschlusses (40) (letzterer ist in Figur 7 auch mit D1 bezeichnet), dass der Bereich des zweiten Anschlussabschnitts (7-9) nicht mehr in den Anschluss (40) eingeführt werden kann. Eine fluiddichte Verbindung zwischen Milchbehälter (1) einerseits und erstem Anschluss (7) andererseits ist somit lediglich mittels des ersten Anschlussabschnitts (7-1) möglich (Figur 7 links).

Der zweite Anschlussabschnitt (7-9) weist einen Außendurchmesser auf, der deutlich größer ist, als der Außendurchmesser des ersten Anschlussabschnitts (7-1) und ist so ausgeformt, dass er (7-9) genau formschlüssig und fluiddicht abdichtend durch den zweiten Anschluss (9) aufgenommen werden kann (vgl. Figur 7 rechts). Der Innendurchmesser D2 des zweiten Anschlusses (9) (für den gilt D2 > D1) ist also so, dass der zweite Anschluss (9) den zweiten Anschlussabschnitt (7-9) im verbundenen Zustand von (7) und (9) außenumfangsseitig umschließt. Nach dem Ablösen des ersten Anschlusses (7) vom Milchbehälter (1) kann somit eine fluiddichte Verbindung der beiden Anschlüsse (7) und (9) gemäß Figur 7 rechts dadurch hergestellt, dass zunächst der erste Anschlussabschnitt (7-1) und darauf folgende auch der zweite Anschlussabschnitt (7-9) (letzterer dann im zweiten Anschluss (9) abdichtend) in den zweiten Anschluss (9) eingeführt wird.

Der Anschluss (7) ist also zweistufig ausgeführt, wobei ein erster Dichtdurchmesser D1 mit dem Milchvorratsbehälter (1) gepaart werden kann und ein zweiter Dichtdurchmesser D2 mit dem Anschluss (9) gepaart werden kann. Dies hat den Vorteil, dass im in Figur 7 rechts gezeigten Zustand der erste Anschlussabschnitt (7-1) innerhalb des Anschlusses (9) vollständig mit Reinigungsflüssigkeit R (in Figur 7 nicht gezeigt) umspült werden kann. Dadurch wird es möglich, eine Querkontamination im Bereich D1 bzw. (7-1) beim Anschließen des ersten Anschlusses (7) (bzw. des weiteren ersten Anschlusses (7')) an einem neuen oder einem gereinigten Milchvorratsbehälter (1) zu vermeiden.

Wie bereits beschrieben, kann als Trennmittel der Drei-Wege-Zusammenführung (6) bzw. (6', 6") zwischen Reinigungszuführung und Rückflusssicherung zur Milchbevorratung ein einfaches 3/2-Wege-Ventil oder ein einfaches 3/3-Wege-Ventil verwendet werden (z.B. als Magnetventil). Es kann aber auch (insbesondere im Fall von Fig. 6 - daher ist diese (500) auch in Fig. 6 angedeutet) bei allen Ausführungsbeispielen eine Vielfachanschluss-Einrichtung (500), wie sie in den Figuren 8 bis 10 gezeigt ist, als 3-Wege-Zusammenführung verwendet werden.

Figur 8 zeigt eine Vielfachanschluss-Einrichtung (500) mit sechs Leitungsanschlüssen A bis F, die zusammen mit an diesen Leitungsanschlüssen angeschlossenen Leitungsabschnitten (nicht gezeigt) sowohl die Fluidführungen der Drei-Wege-Zusammenführung (6) gemäß der Figuren 1 bis 5, als auch die erweiterten Fluidwegführungen gemäß Figur 6 ausbilden kann.

Die Einrichtung (500) weist zwei flachzylindrische, gegeneinander um eine gemeinsame Rotationsachse (52) verdrehbare Scheibenelemente (50) und (51) auf. Das Element (50) (in Figur 8 ganz links in einer Schnittansicht parallel zur Rotationsachse (52) und in Figur 8 links in einer Aufsicht auf die Rotationsachse bzw. in einer Ebene senkrecht zur Rotationsachse (52) gesehen) weist dabei sämtliche Leitungsanschlüsse A bis F als genau sechs Durchgangsbohrungen bzw. Durchgangslöcher auf (der Leitungsanschluss D weist zusätzlich zu seinem Durchgangsloch auch noch einen Senklochbereich auf, vgl. auch die vertikale Strichelung in Figur 8 ganz links). Das zweite Scheibenelement (51) (Figur 8 rechts: Aufsicht auf die Rotationsachse (52); Figur 8 ganz rechts Schnittansicht parallel zur Rotationsachse (52)) weist dagegen lediglich genau zwei Verbindungskammer, nämlich eine längliche, gekrümmte Verbindungskammer (Figur 8 rechts oben) und eine näherungsweise dreiecksförmige Verbindungskammer, auf. Die längliche Verbindungskammer erstreckt sich entlang des Außenumfangs des Scheibenelements (51), die dreiecksförmige Verbindungskammer erstreckt sich von einem außenumfangsseitig liegenden Bereich der Scheibe in die Mitte dieser Scheibe (51) und umfasst dabei auch die Rotationsachse (52).

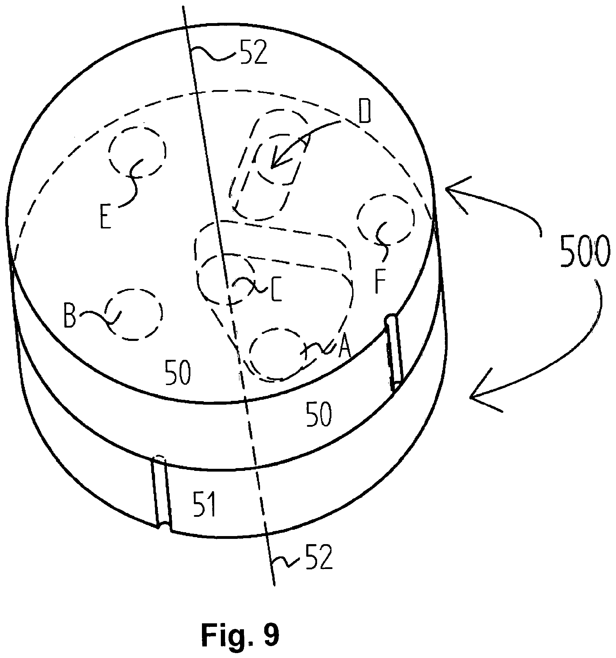

Die beiden flachzylindrischen Scheiben (50), (51) werden, vgl. Fig. 9, bündig und unmittelbar aneinander anstoßend übereinander gelegt. Ein Verdrehen der beiden Scheiben (50), (51) relativ zueinander um die Rotationsachse (52) ermöglicht es (insbesondere über den Senkbohrabschnitt des Leitungsanschlusses D in der Scheibe (50) sowie über die beiden Durchgangslöcher in der Scheibe (51)), paarweise unterschiedliche der Leitungsanschlüsse A, B, C, D, E und F miteinander zu verbinden.

Betrachtet man die Figuren 6 und 8, so kann beispielsweise ein Drehen des Scheibenelements (51) in Uhrzeigerrichtung um 25° (aus der in Figur 8 rechts gezeigten Position) über das Innere der Einrichtung (500) sowohl ein Verbinden der beiden Leitungsanschlüsse D und F als auch gleichzeitig ein Verbinden der beiden Leitungsanschlüsse B und C bewirken (die Scheibe (50) bleibt dabei in ihrer in Figur 8 links gezeigten Position stehen). Damit ist dann gemäß Fig. 6 ein Reinigungsmittelfluss aus dem Reservoir (22) über die Einmündung (31') zum weiteren zweiten Anschluss (9') (gemäß Ventil (30')) und vom weiteren ersten Anschluss (7') (sofern dieser mit dem Anschluss (9') fluiddicht verbunden ist) - gemäß der Ventile (15) und (6) - zur Pumpe (2) und damit hin zur Milchausgabeeinrichtung (4) ermöglicht (Fluidweg D -> F -> (9') -> (7') -> B -> C).

Figur 9 zeigt die Einrichtung (500) in zusammengesetzter Form. Figur 10 zeigt, welche Leitungsverbindungen von Anschlüssen A bis F gemäß unterschiedlicher Drehwinkel bzw. Relativstellungen um die Rotationsachse (52) zu welchen Fluidleitungsverbindungen (über das Innere der Einrichtung (500)) führen.

Mittels zweiter relativ zueinander drehbarer Scheiben (50, 51) (bzw. einer feststehenden Scheibe (50) und einer relativ dazu drehbaren Scheibe (51)) kann somit ein komplexes Ventil auf einfache Art und Weist realisiert werden, mit welchem verschiedene Fluidpfade zu verschiedenen "Verbrauchern" geschaltet werden können. Durch die geometrische Gestaltung gemäß der Figuren 8 und 9 lassen sich z.B. bei der Ausführungsform gemäß Figur 6 die Ventile (6) (bzw. (6', 6")), (15), (30) und (30') in genau einer bzw. einer einzigen Vielfachanschluss-Einrichtung (500) zusammenfassen. Dabei ist die innere Ventilgeometrie der Einrichtung (500) totraumfrei gestaltet. Die Grundeinheit dieser Einrichtung (500) bietet hierfür die sechs Anschlüsse A bis F gemäß Figur 6. Das Anschlusspaar E-F kann vorteilhafterweise so ausgestaltet sein, dass es gleichzeitig beide zweiten Anschlüsse (9) und (9') realisiert. Das Anschlusspaar A-B kann geometrisch so ausgebildet werden, dass es gleichzeitig auch einen Anschluss für beide Milchansaugschläuche (8) und (8') ausbildet.

Die beiden Scheiben (50), (51) können in ihren Winkellagen gegeneinander verdreht werden und somit unterschiedlichste Fluidpfade ausbilden. Figur 8 zeigt in den beiden innenliegenden Hauptansichten jeweils die Dichtflächen, welche in Figur 9 aufeinanderliegend dargestellt sind. Figur 10 zeigt die sich in Abhängigkeit von der Winkellage der beiden Scheiben (50), (51) relativ zueinander ergebenden Ventilschaltwege bzw. Fluidwege. Beispiel: Winkellage 75° ("Normalbetrieb Milch 1", vgl. Figur 10) mit Verbindung des Leitungsanschlusses A und des Leitungsanschlusses C. Die Leitungsanschlüsse B, D, E und F sind in dieser Winkellage verschlossen. Die beiden Scheiben (50), (51) können motorisch relativ zueinander bzw. gegeneinander verdreht werden.

Eine solche Rotationsbewegung der Scheiben (50), (51) relativ zueinander um die Achse (52) kann dazu genutzt werden, um beispielsweise in Position -25° und 25° (vgl. Figur 10) die Verbindung der Anschlüsse (7) und (9) bzw. (7') und (9') miteinander zu verriegeln, damit vor einem Fertigstellen der Reinigung mit Reinigungsmittel R kein Lösen dieser Verbindungen möglich ist. Während der Reinigungszustände kann somit auch bei Verwendung mehrerer Milchsorten M, M' jeweils zwischen unterschiedlichen Stellungen hin- und her geschaltet werden. Insbesondere ergeben sich für die schnell ablaufende Schnellreinigung kurze Schaltwege zwischen den beiden Milchsorten M' und M. Es ist dabei in jeder Winkellage der beiden Scheiben (50), (51) relativ zueinander ausgeschlossen, dass Reinigungsmittel R in einen der Milchbehälter (1), (1') strömen kann.

Die vorliegende Erfindung ermöglicht somit einen zweistufigen Reinigungsansatz wie folgt: Eine erste (vollständig automatisierte) Stufe ist durch Zuführen eines Reinigungsmittels R oder mehrerer Reinigungsmittel R aus dem Reservoir (22) bzw. dessen Kammern (22a) bis (22d) auch während des Anschlusses der Milchzufuhrvorrichtung an den externen Behälter (1) bzw. die Behälter (1), (1') ohne Eingriff durch einen Benutzer möglich (insbesondere: automatisierter Start und automatisierte Durchführung der Reinigung). In einer zweiten Stufe wird die kurze Zeit einer Milchbefüllung im Behälter (1) bzw. (1), (1') oder eines Milchbehälterwechsels für eine Spülung des Schlauchs (8) bzw. der Schläuche (8), (8') und insbesondere für eine Desinfektion des schlauchseitigen Milchanschlussbereichs (7) bzw. der Bereiche (7), (7') eingesetzt. Die erste Stufe kann in regelmäßigen Abständen oder auch lastabhängig in kurzen Pausen während des Tagesbetriebs erfolgen. Die zweite Stufe wird vom Benutzer nur unbewusst wahrgenommen, da diese während einer üblichen Bedienungshandlung stattfindet.

Mit der Erfindung lässt sich eine hochgradig automatisierte Durchführung von Reinigungsschritten realisieren. Ebenso können die Keimzahlen der Milch auf einem niedrigen Niveau gehalten bzw. stabilisiert werden. Hierzu kann eine Abfolge von Reinigungsschritten definiert werden oder es können unterschiedliche Reinigungsbetriebszustände, RBZ, nacheinander durchgeführt werden. Es kann ein Betrieb der Milchzufuhrvorrichtung bzw. der Kaffeemaschine sichergestellt werden, ohne dass der Benutzer eine tatsächlich durchgeführte Reinigung wahrnimmt bzw. mit minimaler Wahrnehmung einer solchen Reinigung durch den Benutzer.

Es ist eine sehr schnelle Desinfektion des Anschlussbereichs möglich. Querkontaminationen bei Behälterwechseln können verhindert werden. Durchspülungen mit Reinigungsmittel R können nahezu beliebig in kleinen Betriebspausen stattfinden. Keimzahlen in der Milchzufuhrvorrichtung bzw. der Kaffeemaschine können durch Spül- und Reinigungsabläufe mit minimalem Aufwand seitens des Benutzers reduziert werden. Selbst ein nicht regelmäßig gereinigter Bereich der Milchanschlussleitung ist tolerant gegenüber Keimen: Der Austausch der Milch bzw. ein Nachschütten von frischer Milch in diesen Schlauchabschnitt führt nämlich dazu, dass keine hundertprozentige Reinigung notwendig ist. Dies, da in diesem Abschnitt die Milch nur mit einer geringen Keimbelastung beaufschlagt wird, da einfache Geometrien vorliegen und da somit eine übermäßige Keimbildung verhindert wird. Eine Reinigung dieses Milchabschnitts ist deswegen letztendlich nur in größeren Zeitabständen notwendig.

Mit einem solchen Betriebsablauf kann die Verarbeitung von Milch über ein langes Wartungsintervall ohne bzw. nahezu ohne angewiesene Benutzerreinigung betrieben werden.

Es kann eine Vielfachanschluss-Einrichtung eingesetzt werden, bei der durch entsprechende Beschaltung von mechanischen Schaltstellungen unter elektrischen Signalen, welche wiederum auf mechanische Stellgitter wirken, eine Kombination von Schaltstellungen ausgeschlossen wird, bei der es zu einer Kontamination des Milchvorrats mit Reinigungsmitteln R kommt.

Es können somit folgende Merkmale im Vordergrund stehen:
- Verschiedene Reinigungsvorgehensweisen werden kombiniert.
- Diese Vorgehensweisen laufen vollautomatisch oder nahezu vollautomatisch im Hintergrund ab, so dass der Benutzer sie nicht oder praktisch nicht wahrnimmt.
- Es kommt zu einer Stabilisierung der Keimzahlen von Milch auf niedrigem Niveau bzw. zu einer Reduzierung der Keimzahlen.
- Dadurch kann Milch über einen relativ langen Zeitraum verarbeitet werden, ohne dass spezielle Reinigungsvorgehensweisen durch einen Benutzer (in denen z. B. auch keine Milchprodukte verkauft werden können) durchgeführt werden müssten.

## Patentansprüche

1. Milchzufuhrvorrichtung zum Zuführen von Milch (M) aus einem Milchvorratsbehälter (1) zu einer Milchausgabeeinrichtung (4), umfassend
eine Milchtransportleitung (20), die an einem ersten (7) ihrer Enden (7, 21) mit dem Milchvorratsbehälter (1) verbindbar oder verbunden ist und mit der über ein zweites (21) ihrer Enden (7, 21) aus dem Milchvorratsbehälter (1) entnommene Milch (M) an die Milchausgabeeinrichtung (4) abgebbar ist,
wobei mittels einer zwischen dem ersten Ende (7) und dem zweiten Ende (21) in Fluidverbindung mit der Milchtransportleitung (20) stehenden Reinigungsmitteltransportleitung (12) eine Drei-Wege-Zusammenführung (6, 6', 6") ausgebildet ist, die so betreibbar ist, dass wahlweise
• entweder in einem Milchflussbetriebszustand (MFBZ) über die Drei-Wege-Zusammenführung (6, 6', 6") Milch (M) vom Milchvorratsbehälter (1) zur Milchausgabeeinrichtung (4) transportierbar ist, während durch die Drei-Wege-Zusammenführung (6, 6', 6") gleichzeitig die Milchtransportleitung (20) fluiddicht gegen die Reinigungsmitteltransportleitung (12) abgeschottet ist,
• oder in einem oder mehreren Reinigungsbetriebszustand/- zuständen (RBZ1, RBZ2, RBZ3) aus der mit der Drei-Wege-Zusammenführung (6, 6', 6") in Fluidverbindung stehenden Reinigungsmitteltransportleitung (12) Reinigungsmittel (R) über die Drei-Wege-Zusammenführung (6, 6', 6") in Richtung zur Milchausgabeeinrichtung (4) hin und/oder in Richtung zu einem Ablauf (11) der Milchzufuhrvorrichtung hin leitbar ist
wobei die Milchtransportleitung (20) einen mit der Drei-Wege-Zusammenführung (6, 6', 6") in Fluidverbindung stehenden Einleitabschnitt (20a) und einen mit der Drei-Wege-Zusammenführung (6, 6', 6") in Fluidverbindung stehenden Ausleitabschnitt (20b) umfasst, **dadurch gekennzeichnet, dass**
der Einleitabschnitt (20a) nicht vollständig starr ausgebildet ist und an seinem der Drei-Wege-Zusammenführung (6, 6', 6") abgewandten Ende einen ersten Anschluss (7) aufweist,
wobei die Milchzufuhrvorrichtung einen zweiten, in Fluidverbindung mit der Reinigungsmitteltransportleitung (12) stehenden Anschluss (9) aufweist, und
wobei der erste Anschluss (7) mit dem zweiten Anschluss (9) lösbar so verbindbar ist, dass im verbundenen Zustand eine über diese beiden Anschlüsse (7, 9) führende Fluidverbindung zwischen der Reinigungsmitteltransportleitung (12) und dem Einleitabschnitt (20a) besteht und dass im verbundenen Zustand eine über diese beiden Anschlüsse (7, 9) und den Einleitabschnitt (20a) führende Fluidverbindung zwischen der Reinigungsmitteltransportleitung (12) und der Drei-Wege-Zusammenführung (6, 6', 6") besteht.

2. Milchzufuhrvorrichtung nach dem vorhergehenden Anspruch
***dadurch gekennzeichnet, dass***
die Milchzufuhrvorrichtung so betreibbar ist, dass ein Fluid (M, R) über den Einleitabschnitt (20a) in die Drei-Wege-Zusammenführung (6, 6', 6") eingeleitet und über den Ausleitabschnitt (20b) wieder aus der Drei-Wege-Zusammenführung (6, 6', 6") ausgeleitet wird.

3. Milchzufuhrvorrichtung nach einem der vorhergehenden Ansprüche
***dadurch gekennzeichnet, dass***
die Drei-Wege-Zusammenführung (6, 6', 6") gemäß einem ersten Reinigungsbetriebszustand (RBZ1) wie folgt betreibbar ist:
Es ist aus der in sie (6, 6', 6") einmündenden Reinigungsmitteltransportleitung (12) Reinigungsmittel (R) über sie (6, 6', 6") in Richtung zur Milchausgabeeinrichtung (4) hin leitbar,
indem durch sie (6, 6', 6") über den Ausleitabschnitt (20b) das Reinigungsmittel (R) in Richtung zur Milchausgabeeinrichtung (4) hin geleitet wird, wobei währenddessen durch sie (6, 6', 6") der Einleitabschnitt (20a) fluiddicht gegen die Reinigungsmitteltransportleitung (12) abgeschottet wird.

4. Milchzufuhrvorrichtung nach einem der vorhergehenden Ansprüche
***dadurch gekennzeichnet, dass***
der Einleitabschnitt (20a) zumindest abschnittsweise bewegbar, bevorzugt flexibel, bevorzugt als flexibler Schlauch (8), ausgebildet ist und
dass im verbundenen Zustand eine über diese beiden Anschlüsse (7, 9) und den Einleitabschnitt (20a) führende Fluidverbindung zwischen einem reinigungsmittelreservoir-zugewandten Abschnitt (12')der Reinigungsmitteltransportleitung (12) und der Drei-Wege-Zusammenführung (6, 6', 6") besteht.

5. Milchzufuhrvorrichtung nach dem vorhergehenden Anspruch
***dadurch gekennzeichnet, dass***
die Drei-Wege-Zusammenführung (6, 6', 6") gemäß einem zweiten Reinigungsbetriebszustand (RBZ2) wie folgt betreibbar ist:
Es ist Reinigungsmittel (R) aus der Reinigungsmitteltransportleitung (12), bevorzugt aus dem reinigungsmittelreservoir-zugewandten Abschnitt (12') derselben (12), zu den sich im verbundenen Zustand befindenden beiden Anschlüsse (7, 9) hin leitbar, von letzteren (7, 9) über den Einleitabschnitt (20a) in die Drei-Wege-Zusammenführung (6, 6', 6") einleitbar, aus letzterer (6, 6', 6") über den Ausleitabschnitt (20b) ausleitbar und schließlich über die Milchausgabeeinrichtung (4) und/oder den Ablauf (11) aus der Milchzufuhrvorrichtung ableitbar.

6. Milchzufuhrvorrichtung nach dem vorhergehenden Anspruch
***dadurch gekennzeichnet, dass***
die Drei-Wege-Zusammenführung (6, 6', 6") so betreibbar ist, dass Reinigungsmittel (R) zusätzlich auch aus der Reinigungsmitteltransportleitung (12), bevorzugt über den reinigungsmittelreservoir-zugewandten Abschnitt (12') und einen reinigungsmittelreservoirabgewandten Abschnitt (12") der Reinigungsmitteltransportleitung (12), direkt, also ohne über die sich im verbundenen Zustand befindenden beiden Anschlüsse (7, 9) und über den Einleitabschnitt (20a) zu fließen, in die Drei-Wege-Zusammenführung (6, 6', 6") einleitbar ist, aus letzterer (6, 6', 6") über den Ausleitabschnitt (20b) ausleitbar ist und schließlich über die Milchausgabeeinrichtung (4) und/oder den Ablauf (11) aus der Milchzufuhrvorrichtung ableitbar ist.

7. Milchzufuhrvorrichtung nach einem der drei vorhergehenden Ansprüche
***dadurch gekennzeichnet, dass***
der erste Anschluss (7) und/oder der zweite Anschluss (9) eine Verbindungszustand-Erkennungseinrichtung aufweist/aufweisen, mit der feststellbar ist, ob sich die beiden Anschlüsse (7, 9) im miteinander verbundenen Zustand befinden oder nicht,
und/oder
dass der erste Anschluss (7) und/oder der zweite Anschluss (9) eine Verbindungslösungs-Verhinderungseinrichtung aufweist/aufweisen, mit der, wenn sich die beiden Anschlüsse (7, 9) im miteinander verbundenen Zustand befinden und wenn sich die Milchzufuhrvorrichtung in einem der Reinigungsbetriebszustände (RBZ1, RBZ2, RBZ3) befindet, ein Lösen der Verbindung zwischen den beiden Anschlüssen (7, 9) verhinderbar ist,
und/oder
der erste Anschluss (7) einen ersten Anschlussabschnitt (7-1), der zum fluiddichten Verbinden des ersten Anschlusses (7) mit dem Milchvorratsbehälter (1) ausgebildet ist, und einen zweiten Anschlussabschnitt (7-9), der zum fluiddichten Verbinden des ersten Anschlusses (7) mit dem zweiten Anschluss (9) ausgebildet ist, aufweist.

8. Milchzufuhrvorrichtung nach einem der vorhergehenden Ansprüche ,
***dadurch gekennzeichnet, dass***
der Einleitabschnitt (20a) nicht vollständig starr, bevorzugt zumindest abschnittsweise bewegbar, bevorzugt flexibel, bevorzugt als flexibler Schlauch (8), ausgebildet ist und an seinem der Drei-Wege-Zusammenführung (6, 6', 6") abgewandten Ende einen ersten Anschluss (7) aufweist,
dass die Milchzufuhrvorrichtung eine mit einem/dem Ablauf (11) der Milchzufuhrvorrichtung verbundene, bevorzugt zumindest abschnittsweise flexible Bypassleitung (10) aufweist, die an ihrem dem Ablauf (11) abgewandten Ende einen dritten Anschluss (33) aufweist, und
dass der erste Anschluss (7) mit dem dritten Anschluss (33) lösbar so verbindbar ist, dass im verbundenen Zustand eine über die Reinigungsmitteltransportleitung (12), die Drei-Wege-Zusammenführung (6, 6', 6"), diese beiden Anschlüsse (7, 33) und die Bypassleitung (10) in den Ablauf (11) führende Fluidverbindung besteht.

9. Milchzufuhrvorrichtung nach dem vorhergehenden Anspruch
***dadurch gekennzeichnet, dass***
die Drei-Wege-Zusammenführung (6, 6', 6") gemäß einem dritten Reinigungsbetriebszustand (RBZ3) wie folgt betreibbar ist:
Es ist im verbundenen Zustand des ersten Anschlusses (7) und des dritten Anschlusses (33) Reinigungsmittel (R) über die Reinigungsmitteltransportleitung (12), die Drei-Wege-Zusammenführung (6, 6', 6"), die beiden verbundenen Anschlüsse (7, 33) und die Bypassleitung (10) in den Ablauf (11) leitbar und aus letzterem (11) aus der Milchzufuhrvorrichtung ableitbar.

10. Milchzufuhrvorrichtung nach einem der vorhergehenden Ansprüche
***dadurch gekennzeichnet, dass***
die Drei-Wege-Zusammenführung (6, 6', 6") gemäß mehreren Reinigungsbetriebszuständen betreibbar ist und/oder gemäß mindestens zwei beliebig aus dem ersten (RBZ1), dem zweiten (RBZ2) und dem dritten (RBZ3) Reinigungsbetriebszustand ausgewählten Reinigungsbetriebszuständen betreibbar ist, bevorzugt wahlweise und/oder umschaltbar gemäß allen drei aus dem ersten (RBZ1), dem zweiten (RBZ2) und dem dritten (RBZ3) Reinigungsbetriebszustand betreibbar ist.

11. Milchzufuhrvorrichtung nach einem der vorhergehenden Ansprüche
***dadurch gekennzeichnet, dass***
die Drei-Wege-Zusammenführung (6, 6', 6") ein Ventil (6) ist oder umfasst oder eine Kombination aus mehreren Ventilen (6', 6") ist oder umfasst,
bevorzugt ein 3/2-Wege-Ventil oder ein 3/3-Wege-Ventil ist oder umfasst
oder
bevorzugt genau zwei Ventile (6', 6") umfasst oder daraus besteht, wobei bevorzugt eines (6') dieser beiden Ventile ein Schlauchklemm- oder Schlauchquetschventil ist und das andere (6") dieser beiden Ventile ein 2/2-Wege-Ventil ist.

12. Milchzufuhrvorrichtung nach einem der vorhergehenden Ansprüche ,
***gekennzeichnet durch***
eine bevorzugt einen Drucksensor (16) umfassende Rückflusssicherungseinrichtung, die dazu ausgebildet ist, während des Betriebs der Milchzufuhrvorrichtung in einem oder mehreren der Reinigungsbetriebszustände (RBZ1, RBZ2, RBZ3) zu überwachen, ob ein Rückfluss von Reinigungsmittel (R) aus dem Ausleitabschnitt (20b) und/oder aus der Reinigungsmitteltransportleitung (12) **durch** die Drei-Wege-Zusammenführung (6, 6', 6") hindurch in den Einleitabschnitt (20a) erfolgt.

13. Milchzufuhrvorrichtung nach einem der vorhergehenden Ansprüche
***dadurch gekennzeichnet, dass***
das erste Ende (7, 7') der Milchtransportleitung (20) zum gleichzeitigen fluiddichten Verbinden mit mehreren unterschiedlichen, bevorzugt mit genau zwei oder genau drei unterschiedlichen, Milchvorratsbehältern (1, 1') ausgebildet ist,
wobei bevorzugt die Milchzufuhrvorrichtung so betreibbar ist, dass wahlweise Milch (M) aus genau einem dieser mehreren Milchvorratsbehälter (1, 1') zur Milchausgabeeinrichtung (4) transportierbar ist,
und/oder
eine die Drei-Wege-Zusammenführung (6, 6', 6") umfassende oder ausbildende Vielfachanschluss-Einrichtung (500),
wobei die Vielfachanschluss-Einrichtung (500) mehrere, bevorzugt genau zwei, gegeneinander um eine Rotationsachse (52) verdrehbare Scheibenelemente (50, 51) und eine Mehrzahl von Leitungsanschlüssen (A, B, C, D, E, F) aufweist, und
wobei je nach Relativstellung der Scheibenelemente (50, 51) zueinander um die Rotationsachse (52) jeweils unterschiedliche der Leitungsanschlüsse (A, B, C, D, E, F) durch das Innere der Vielfachanschluss-Einrichtung (500) führend zur Fluidführung miteinander verbunden sind, bevorzugt paarweise miteinander verbunden sind.

14. Getränkebereiter, insbesondere elektrisch betreibbare Kaffeemaschine, insbesondere Kaffeevollautomat, ***gekennzeichnet* dadurch, dass** der Gertänkebereiter eine Milchzufuhrvorrichtung nach einem der vorhergehenden Ansprüche aufweist.

15. Verfahren zum Zuführen von Milch (M) aus einem Milchvorratsbehälter (1) zu einer Milchausgabeeinrichtung (4)
***dadurch gekennzeichnet, dass***
das Verfahren in/mit einer Milchzufuhrvorrichtung oder in/mit einem Getränkebereiter nach einem der vorhergehenden Ansprüche durchgeführt wird.

## Claims

1. Milk supply device for supplying milk (M) from a milk supply container (1) to a milk dispensing device (4), comprising
a milk transport line (20) which can be connected or is connected at a first (7) of the ends (7, 21) thereof to the milk supply container (1) and with which, via a second (21) of the ends (7, 21) thereof, milk (M) which has been taken from the milk supply container (1) can be delivered to the milk dispensing device (4),
wherein, by means of a cleaning agent transport line (12) which is in fluid communication with the milk transport line (20) between the first end (7) and the second end (21), a three-way junction (6, 6', 6") is configured which can be operated such that optionally
• either in a milk flow operating state (MFBZ), milk (M) can be transported via the three-way junction (6, 6', 6") from the milk supply container (1) to the milk dispensing device (4), whilst the milk transport line (20) is sealed off by the three-way junction (6, 6', 6"), at the same time, relative to the cleaning agent transport line (12), in a fluid-impermeable manner,
• or, in one or more cleaning operation state/states (RBZ1, RBZ2, RBZ3), cleaning agent (R) can be conducted from the cleaning agent transport line (12) which is in fluid communication with the three-way junction (6, 6', 6"), via the three-way junction (6, 6', 6") in the direction towards the milk dispensing device (4) and/or in the direction towards a discharge (11) of the milk supply device,
wherein the milk transport line (20) comprises an inflow portion (20a) which is in fluid communication with the three-way junction (6, 6', 6") and an outflow portion (20b) which is in fluid communication with the three-way junction (6, 6', 6"),
**characterized in that**
the inflow portion (20a) is configured to be not completely rigid and has a first connection (7) at its end orientated away from the three-way junction (6, 6', 6"),
wherein the milk supply device has a second connection (9) which is in fluid connection with the cleaning agent transport line (12),
wherein the first connection (7) can be connected detachably to the second connection (9) such that, in the connected state, a fluid connection leading via these two connections (7, 9) exists between the cleaning agent transport line (12) and the inflow portion (20a), and that, in the connected state, a fluid connection which leads via these two connections (7, 9) and the inflow portion (20a) exists between the cleaning agent transport line (12) and the three-way junction (6, 6', 6").

2. Milk supply device according to the preceding claim,
***characterised in that***
the milk supply device being operable such that a fluid (M, R) is introduced into the three-way junction (6, 6', 6") via the inflow portion (20a) and discharged again from the three-way junction (6, 6', 6") via the outflow portion (20b).

3. Milk supply device according to one of the preceding claims,
***characterised in that***
the three-way junction (6, 6', 6") can be operated as follows according to a first cleaning operation state (RBZ1):
cleaning agent (R) can be conducted from the cleaning agent transport line (12) which opens into it (6, 6', 6"), via it (6, 6', 6") in the direction towards the milk dispensing device (4),
by the cleaning agent (R) being conducted through it (6, 6', 6") via the outflow portion (20b) in the direction towards the milk dispensing device (4), meanwhile the inflow portion (20a) being sealed by it (6, 6', 6"), relative to the cleaning agent transport line (12), in a fluid-impermeable manner.

4. Milk supply device according to one of the two preceding claims,
***characterised in that***
the inflow portion (20a) is configured to be moveable at least in portions, preferably configured to be flexible, preferably configured as a flexible hose (8),
and
that, in the connected state, a fluid connection leading via these two connections (7, 9) and the inflow portion (20a) exists between a portion (12') of the cleaning agent transport line (12), which is orientated towards a cleaning agent reservoir, and the three-way junction (6, 6', 6").

5. Milk supply device according to the preceding claim,
***characterised in that***
the three-way junction (6, 6', 6") can be operated as follows according to a second cleaning operation state (RBZ2):
cleaning agent (R) can be conducted from the cleaning agent transport line (12), preferably from the portion (12') of the same (12) orientated towards a cleaning agent reservoir, towards the two connections (7, 9) which are situated in the connected state, from the latter (7, 9) via the inflow portion (20a) into the three-way junction (6, 6', 6"), from the latter (6, 6', 6") via the outflow portion (20b) and finally via the milk dispensing device (4) and/or the discharge (11) from the milk supply device.

6. Milk supply device according to the preceding claim,
***characterised in that***
the three-way junction (6, 6', 6") can be operated such that cleaning agent (R) can be conducted in addition also from the cleaning agent transport line (12), preferably via the portion (12'), orientated towards a cleaning agent reservoir, and a portion (12") of the cleaning agent transport line (12), orientated away from a cleaning agent reservoir, directly, i.e. without flowing via the two connections (7, 9) which are situated in the connected state and via the inflow portion (20a), into the three-way junction (6, 6', 6"), can be conducted from the latter (6, 6', 6") via the outflow portion (20b) and finally can be discharged via the milk dispensing device (4) and/or the discharge (11) from the milk supply device.

7. Milk supply device according to one of the three preceding claims,
***characterised in that***
the first connection (7) and/or the second connection (9) has/have a connection state detection device, with which it can be ascertained whether the two connections (7, 9) are situated in the state of connection to each other or not,
and/or
**in that** the first connection (7) and/or the second connection (9) has/have a connection release-prevention device with which, if the two connections (7, 9) are situated in the state of connection to each other and if the milk supply device is in one of the cleaning operation states (RBZ1, RBZ2, RBZ3), release of the connection between the two connections (7, 9) can be prevented
and/or
the first connection (7) has a first connection portion (7-1) which is configured for fluid-impermeable connection of the first connection (7) to the milk supply container (1), and a second connection portion (7-9) which is configured for fluid-impermeable connection of the first connection (7) to the second connection (9).

8. Milk supply device according to one of the preceding claims,
***characterised in that***
the inflow portion (20a) is configured to be not completely rigid, preferably configured to be moveable at least in portions, more preferably configured to be flexible, most preferably configured as a flexible hose (8), and has a first connection (7) at its end orientated away from the three-way junction (6, 6', 6"),
that the milk supply device has a bypass line (10) which is connected to a/the discharge (11) of the milk supply device and is preferably flexible, at least in portions, and which bypass line (10) has a third connection (33) at its end orientated away from the discharge (11), and
that the first connection (7) can be connected detachably to the third connection (33) such that, in the connected state, there exists a fluid connection which leads via the cleaning agent transport line (12), the three-way junction (6, 6', 6"), these two connections (7, 33) and the bypass line (10) into the discharge (11).

9. Milk supply device according to the preceding claim,
***characterised in that***
the three-way junction (6, 6', 6") can be operated as follows according to a third cleaning operation state (RBZ3):
cleaning agent (R) can be conducted, in the connected state of the first connection (7) and of the third connection (33), via the cleaning agent transport line (12), the three-way junction (6, 6', 6"), the two connected connections (7, 33) and the bypass line (10) into the discharge (11) and can be discharged from the latter (11) from the milk supply device.

10. Milk supply device according to one of the preceding claims,
***characterised in that***
the three-way junction (6, 6', 6") can be operated according to several cleaning operation states and/or can be operated according to at least two cleaning operation states selected arbitrarily from the first (RBZ1), the second (RBZ2) and the third (RBZ3) cleaning operation state, preferably can be operated optionally and/or switchably according to all three from the first (RBZ1), the second (RBZ2) and the third (RBZ3) cleaning operation state.

11. Milk supply device according to one of the preceding claims,
***characterised in that***
the three-way junction (6, 6', 6") is or comprises a valve (6) or is or comprises a combination of several valves (6', 6"),
preferably is or comprises a 3/2-way valve or a 3/3-way valve
or
preferably comprises precisely two valves (6', 6") or consists thereof, preferably one (6') of these two valves being a hose clamp- or squeezed tube valve and the other (6") of these two valves being a 2/2-way valve.

12. Milk supply device according to one of the preceding claims,
***characterised by***
a return flow safety device, preferably comprising a pressure sensor (16), which is configured for monitoring, during operation of the milk supply device in one or more of the cleaning operation states (RBZ1, RBZ2, RBZ3), whether a return flow of cleaning agent (R) from the outflow portion (20b) and/or from the cleaning agent transport line (12) is effected through the three-way junction (6, 6', 6") into the inflow portion (20a).

13. Milk supply device according to one of the preceding claims,
***characterised in that***
the first end (7, 7') of the milk transport line (20) is configured for simultaneous fluid-impermeable connection to several different, preferably to precisely two or precisely three different, milk supply containers (1, 1'),
preferably the milk supply device being able to be operated such that optionally milk (M) can be transported from precisely one of these several milk supply containers (1, 1') to the milk dispensing device (4);
and/or
a multiple-connection device (500) comprising or forming the three-way junction (6, 6', 6"),
wherein the multiple-connection device (500) has several, preferably precisely two, disc elements (50, 51) which can be rotated against each other about an axis of rotation (52) and a plurality of line connections (A, B, C, D, E, F), and
wherein depending on the relative position of the disc elements (50, 51) towards each other around the axis of rotation (52), respectively different ones of the line connections (A, B, C, D, E, F), which lead through the interior of the multiple-connection device (500), being connected to each other for fluid guidance, preferably being connected to each other in pairs.

14. Drinks preparer, in particular electrically operable coffee machine, in particular fully automatic coffee machine,
***characterised in that*** the drinks preparer comprises a milk supply device according to one of the preceding claims.

15. Method for supplying milk (M) from a milk supply container (1) to a milk dispensing device (4)
***characterised in that***
the method is implemented in/with a milk supply device or in/with a drinks preparer according to one of the preceding claims.

## Revendications

1. Dispositif d'alimentation en lait pour l'introduction de lait (M) d'un réservoir de lait (1) vers un dispositif de distribution de lait (4), comprenant
une conduite de transport de lait (20), qui peut être reliée ou est reliée, au niveau d'une première (7) de ses extrémités (7, 21), avec le réservoir de lait (1) et avec laquelle le lait (M) prélevé dans le réservoir de lait (1) par l'intermédiaire d'une deuxième (21) de ses extrémités (7, 21) peut être versé dans le dispositif de distribution de lait (4),
une conduite de transport de produit de nettoyage (12), en liaison fluidique avec la conduite de transport de lait (20), entre la première extrémité (7) et la deuxième extrémité (21), permettant de réaliser une jonction à trois voies (6, 6', 6") qui peut être contrôlée de façon à ce que, au choix :
• dans un mode d'écoulement du lait (MFBZ), la jonction à trois voies (6, 6', 6") permette de transporter le lait (M) du réservoir de lait (1) vers le dispositif de distribution de lait (4), tandis que la jonction à trois voies (6, 6', 6") permet en même temps d'isoler la conduite de transport de lait (20) de manière étanche contre les fluides par rapport à la conduite de transport de produit de nettoyage (12),
• ou, dans un ou plusieurs modes de nettoyage (RBZ1, RBZ2, RBZ3), à partir de la conduite de transport de produit de nettoyage (12) en liaison fluidique avec la jonction à trois voies (6, 6', 6"), du produit de nettoyage (R) peut être conduit, par l'intermédiaire de la jonction à trois voies (6, 6', 6"), en direction du dispositif de distribution de lait (4) et/ou en direction d'une évacuation (11) du dispositif d'alimentation en lait
la conduite de transport de lait (20) comprenant une portion d'entrée (20a) en liaison fluidique avec la jonction à trois voies (6, 6', 6") et une portion de sortie (20b) en liaison fluidique avec la jonction à trois voies (6, 6', 6"),
**caractérisé en ce que**
la portion d'entrée (20a) n'est pas conçue de manière entièrement rigide et comprend, au niveau de son extrémité opposée à la jonction à trois voies (6, 6', 6"), un premier raccord (7),
le dispositif d'alimentation en lait comprenant un deuxième raccord (9) en liaison fluidique avec la conduite de transport de produit de nettoyage (12) et
le premier raccord (7) pouvant être relié de manière amovible avec le deuxième raccord (9) de façon à ce que, dans l'état relié, il existe une liaison fluidique reliant, par l'intermédiaire de ces deux raccords (7, 9), la conduite de transport de produit de nettoyage (12) et la portion d'entrée (20a) et à ce que, dans l'état relié, il existe une liaison fluidique reliant, par l'intermédiaire de ces deux raccords (7, 9) et de la portion d'entrée (20a), la conduite de transport de produit de nettoyage (12) et la jonction à trois voies (6, 6', 6").

2. Dispositif d'alimentation en lait selon la revendication précédente,
**caractérisé en ce que**
le dispositif d'alimentation en lait peut être contrôlé de façon à ce qu'un fluide (M, R) soit introduit par l'intermédiaire de la portion d'entrée (20a) dans la jonction à trois voies (6, 6', 6") et soit à nouveau évacué, par l'intermédiaire de la portion de sortie (20b), hors de la jonction à trois voies (6, 6', 6").

3. Dispositif d'alimentation en lait selon l'une des revendications précédentes,
**caractérisé en ce que**
la jonction à trois voies (6, 6', 6") peut être contrôlée, selon un premier mode de nettoyage (RBZ1), comme suit :
un produit de nettoyage (R) peut être conduit, de la conduite de produit de nettoyage (12) débouchant dans la jonction à trois voies (6, 6', 6"), par l'intermédiaire de celle-ci (6, 6', 6") en direction du dispositif de distribution de lait (4),
grâce au fait que, à l'aide de celle-ci (6, 6', 6"), le produit de nettoyage (R) est conduit, par l'intermédiaire de la portion de sortie (20b), en direction du dispositif de distribution du lait (4), la portion d'entrée (20a) étant, pendant ce temps, isolée par celle-ci (6, 6', 6") de manière étanche contre les fluides par rapport à la conduite de transport de produit de nettoyage (12).

4. Dispositif d'alimentation en lait selon l'une des revendications précédentes,
**caractérisé en ce que**
la portion d'entrée (20a) est conçue de manière mobile, au moins à certains endroits, de préférence de manière flexible, de préférence sous la forme d'un tuyau flexible (8) et
**en ce que**, dans l'état relié, une liaison fluidique reliant, par l'intermédiaire de ces deux raccords (7, 9) et de la portion d'entrée (20a), une portion (12'), orientée vers le réservoir de produit de nettoyage, de la conduite de transport de produit de nettoyage (12) et la jonction à trois voies (6, 6', 6") existe.

5. Dispositif d'alimentation en lait selon la revendication précédente,
**caractérisé en ce que**
la jonction à trois voies (6, 6', 6") peut être contrôlée, selon un deuxième mode de nettoyage (RBZ2), comme suit :
un produit de nettoyage (R) peut être conduit, de la conduite de produit de nettoyage (12), de préférence de la portion (12'), orientée vers le réservoir de produit de nettoyage, de celle-ci (12), vers les deux raccords (7, 9) se trouvant dans l'état relié, introduit depuis ces derniers (7, 9), par l'intermédiaire de la portion d'entrée (20a), vers la jonction à trois voies (6, 6', 6"), évacué de cette dernière (6, 6', 6"), par l'intermédiaire de la portion de sortie (20b) et finalement évacué, par l'intermédiaire du dispositif de distribution de lait (4) et/ou de l'évacuation (11), hors du dispositif d'alimentation en lait.

6. Dispositif d'alimentation en lait selon la revendication précédente,
**caractérisé en ce que**
la jonction à trois voies (6, 6', 6") peut être contrôlée de façon à ce qu'un produit de nettoyage (R) puisse en outre être introduit de la conduite de transport de produit de nettoyage (12), de préférence par l'intermédiaire de la portion (12'), orientée vers le réservoir de produit de nettoyage, et d'une portion (12"), opposée au réservoir de produit de nettoyage, de la conduite de transport de produit de nettoyage (12), directement, donc sans s'écouler par les deux raccords (7, 9) se trouvant dans l'état relié et par la portion d'entrée (20a), dans la jonction à trois voies (6, 6', 6"), évacué de cette dernière (6, 6', 6") par la portion de sortie (20b) et finalement évacué, par l'intermédiaire du dispositif de distribution de lait (4) et/ou de l'évacuation (11), hors du dispositif d'alimentation en lait.

7. Dispositif d'alimentation en lait selon l'une des trois revendications précédentes,
**caractérisé en ce que**
le premier raccord (7) et/ou le deuxième raccord (9) comprend/comprennent un dispositif de détection d'état de liaison, avec lequel il est possible de déterminer si les deux raccords (7, 9) sont reliés entre eux ou non,
et/ou
le premier raccord (7) et/ou le deuxième raccord (9) comprend/comprennent un dispositif empêchant le détachement de la liaison, avec lequel, lorsque les deux raccords (7, 9) sont reliés entre eux, et lorsque le dispositif d'alimentation en lait se trouve dans un des modes de nettoyage (RBZ1, RBZ2, RBZ3), un détachement de la liaison entre les deux raccords (7, 9) peut être empêché,
et/ou
le premier raccord (7) comprend une première portion de raccord (7-1), qui est conçue pour la liaison étanche aux fluides du premier raccord (7) avec le réservoir de lait (1), et une deuxième portion de raccord (7-9), qui est conçue pour la liaison étanche aux fluides du premier raccord (7) avec le deuxième raccord (9).

8. Dispositif d'alimentation en lait selon l'une des revendications précédentes,
**caractérisé en ce que**
la portion d'entrée (20a) n'est pas conçue de manière entièrement rigide, de préférence est conçue de manière mobile au moins à certains endroits, de préférence de manière flexible, de préférence sous la forme d'un tuyau flexible (8), et comprend, au niveau de son extrémité opposée à la jonction à trois voies (6, 6', 6"), un premier raccord (7),
le dispositif d'alimentation en lait comprend une conduite de dérivation (10), flexible au moins à certains endroits, reliée avec une évacuation/l'évacuation (11) du dispositif d'alimentation en lait, qui comprend, au niveau de son extrémité opposée à l'évacuation (11), un troisième raccord (33) et
le premier raccord (7) peut être relié de manière amovible avec le troisième raccord (33) de façon à ce que, dans l'état relié, il existe une liaison fluidique conduisant, par l'intermédiaire de la conduite de transport de produit de nettoyage (12), de la jonction à trois voies (6, 6', 6"), de ces deux raccords (7, 33) et de la conduite de dérivation (10), vers l'évacuation (11).

9. Dispositif d'alimentation en lait selon la revendication précédente,
**caractérisé en ce que**
la jonction à trois voies (6, 6', 6") peut être contrôlée, selon un troisième mode de nettoyage (RBZ3), comme suit :
un produit de nettoyage (R) peut être conduit, dans l'état relié du premier raccord (7) et du troisième raccord (33), par l'intermédiaire de la conduite de transport de produit de nettoyage (12), de la jonction à trois voies (6, 6', 6"), des deux raccords (7, 33) reliés et de la conduite de dérivation (10), vers l'évacuation (11) et évacué de celle-ci (11) hors du dispositif d'alimentation en lait.

10. Dispositif d'alimentation en lait selon l'une des revendications précédentes,
**caractérisé en ce que**
la jonction à trois voies (6, 6', 6") peut être contrôlée selon plusieurs modes de nettoyage et/ou selon au moins deux modes de nettoyage sélectionnés de manière quelconque parmi le premier (RBZ1), le deuxième (RBZ2) et le troisième (RBZ3) mode de nettoyage, de préférence au choix et/ou de manière commutable selon les trois parmi le premier (RBZ1), le deuxième (RBZ2) et le troisième (RBZ3) mode de nettoyage.

11. Dispositif d'alimentation en lait selon l'une des revendications précédentes,
**caractérisé en ce que**
la jonction à trois voies (6, 6', 6") est ou comprend une vanne (6) ou bien est ou comprend une combinaison de plusieurs vannes (6, 6', 6"),
est ou comprend de préférence une vanne 3/2 voies ou une vanne 3/3 voies
ou
comprend ou est constituée de préférence d'exactement deux vannes (6', 6"), de préférence une (6') de ces deux vannes étant une vanne de blocage de tuyau ou d'écrasement de tuyau et l'autre (6") de ces deux vannes étant une vanne 2/2 voies.

12. Dispositif d'alimentation en lait selon l'une des revendications précédentes,
**caractérisé par**
un dispositif anti-retour comprenant de préférence un capteur de pression (16), qui est conçu pour surveiller, pendant le fonctionnement du dispositif d'alimentation en lait dans un ou plusieurs des modes de nettoyage (RBZ1, RBZ2, RBZ3), si un retour de produit de nettoyage (R) a lieu, de la portion de sortie (20b) et/ou de la conduite de transport de produit de nettoyage (12), à travers la jonction à trois voies (6, 6', 6"), vers la portion d'entrée (20a).

13. Dispositif d'alimentation en lait selon l'une des revendications précédentes,
**caractérisé en ce que**
la première extrémité (7, 7') de la conduite de transport de lait (20) est conçue pour la liaison étanche aux fluides simultanée avec plusieurs, de préférence avec exactement deux ou exactement trois, réservoirs de laits (1, 1') différents,
de préférence le dispositif d'alimentation en lait pouvant être contrôlé de façon à ce que, au choix, le lait (M) puisse être transporté d'exactement un de ces plusieurs réservoirs de lait (1, 1') vers le dispositif de distribution de lait (4),
et/ou
un dispositif à raccords multiples (500) comprenant ou constituant la jonction à trois voies (6, 6', 6"),
le dispositif à raccords multiples (500) comprenant plusieurs, de préférence deux, éléments à disques (50, 51) pouvant tourner l'un contre l'autre autour d'un axe de rotation (52) et une pluralité de raccords de conduites (A, B, C, D, E, F) et
selon la position relative des éléments à disques (50, 51) entre eux autour de l'axe de rotation (52), différents raccords de conduites (A, B, C, D, E, F) étant reliés entre eux, de préférence reliés entre eux par paires, pour la conduite d'un fluide à travers l'intérieur du dispositif à raccords multiples.

14. Préparateur de boissons, plus particulièrement machine à café électrique, plus particulièrement automate à café,
**caractérisé en ce que** le préparateur de boissons comprend un dispositif d'alimentation en lait selon l'une des revendications précédentes.

15. Procédé d'alimentation en lait (M) d'un dispositif de distribution de lait (4) à partir d'un réservoir de lait (1),
**caractérisé en ce que**
ce procédé est exécuté dans/avec un dispositif d'alimentation en lait ou dans/avec un préparateur de boissons selon l'une des revendications précédentes.
